# EUROPÄISCHE PATENTSCHRIFT

(11) **EP 4 185 915 B1**
(45) Veröffentlichungstag und Bekanntmachung des Hinweises auf die Patenterteilung: **20.05.2026**
(21) Anmeldenummer: 21748617.4
(22) Anmeldetag: 21.07.2021
(51) Int. Cl.: G02B 21/36, G02B 27/10, G02B 27/14, A61B 90/00, G02B 21/00

(54) **OPTISCHES SYSTEM**
OPTICAL SYSTEM
SYSTÈME OPTIQUE

(30) Priorität: 22.07.2020 DE 102020209268
(43) Veröffentlichungstag der Anmeldung: 31.05.2023
(73) Patentinhaber: Hochschule Emden/Leer, 26723 Emden (DE)
(72) Erfinder: NAPIER, James, 26723 Emden (DE); NEU, Walter, 26723 Emden (DE)
(74) Vertreter: Taruttis, Stefan Georg
(86) Internationale Anmeldenummer: PCT/EP2021/070447
(87) Internationale Veröffentlichungsnummer: WO 2022/018167

(56) Entgegenhaltungen:
- EP-A1- 3 614 191
- EP-B1- 2 615 967
- US-A1- 2001 022 341
- US-A1- 2012 113 431
- US-A1- 2017 059 299
- US-A1- 2017 336 329
- ZHENG CHENG ET AL: "Three-dimensional super-resolved live cell imaging through polarized multi-angle TIRF", OPTICS LETTERS, vol. 43, no. 7, 19 March 2018 (2018-03-19), US, pages 1423, XP055851597, ISSN: 0146-9592, DOI: 10.1364/OL.43.001423
- BIGELOW ALAN ET AL: "Microbeam-integrated multiphoton imaging system", REVIEW OF SCIENTIFIC INSTRUMENTS, AIP, MELVILLE, NY, US, vol. 79, no. 12, 12 December 2008 (2008-12-12), pages 123707 - 123707, XP012114969, ISSN: 0034-6748, DOI: 10.1063/1.3043439
- GEORGESCU TIBERIUS S. ET AL: "Free space variable optical attenuator using frustrated total internal reflection with 70dB dynamic range", APPLIED OPTICS, vol. 57, no. 34, 30 November 2018 (2018-11-30), US, pages 10051, XP055851725, ISSN: 1559-128X, Retrieved from the Internet <URL:https://www.osapublishing.org/DirectPDFAccess/399AB078-AD01-4B4D-9C607FAB59091B21_402661/ao-57-34-10051.pdf?da=1&id=402661&seq=0&mobile=no> DOI: 10.1364/AO.57.010051
- NIELS M ISRAELSEN ET AL: "Real-time High-Resolution Mid-infrared Optical Coherence Tomography", ARXIV.ORG, CORNELL UNIVERSITY LIBRARY, 201 OLIN LIBRARY CORNELL UNIVERSITY ITHACA, NY 14853, 12 October 2018 (2018-10-12), XP081417111
- LODHI MUHAMMAD A ET AL: "Computational imaging through a fiber-optic bundle", PROCEEDINGS OF SPIE; [PROCEEDINGS OF SPIE ISSN 0277-786X VOLUME 10524], SPIE, US, vol. 10211, 5 May 2017 (2017-05-05), pages 1021108 - 1021108, XP060088588, ISBN: 978-1-5106-1533-5, DOI: 10.1117/12.2263485
- "Light and Video Microscopy", 2 January 2014, ELSEVIER, ISBN: 978-0-12-411536-1, article WAYNE RANDY O: "Light and Video Microscopy", pages: 72 - 73, XP055852048

## Beschreibung

Die vorliegende Erfindung betrifft ein optisches System und ein damit durchführbares Verfahren zum Detektieren von Strahlung aus einem Messbereich. Das erfindungsgemäße optische System zeichnet sich dadurch aus, dass es mehrere Detektoren für Strahlung und nur genau eine Tubuslinse aufweist.

Das erfindungsgemäße optische System hat durch seine besondere Anordnung den Vorteil, dass es platzsparender ist als herkömmliche optische Systeme mit mehreren Tubuslinsen und dass es flexibel für verschiedene Anwendungen der Detektion von Strahlung verwendet werden kann. Das optische System ist insbesondere als optisches Mikroskop, insbesondere zur Verwendung als Vorrichtung zur optischen Biopsie, als Vorrichtung zur Entfernungsbestimmung z.B. mittels LIDAR oder optischer Kohärenztomografie (OCT) oder interferometrischen relativen und absoluten Entfernungsbestimmungsverfahren, als Vorrichtung zur Ramanspektroskopie und -bildgebung, zur Fluoreszenzspektroskopie und -bildgebung, z.B. mittels Fluoreszenzlebensdauermessungen ("Fluorescence Lifetime Imaging Measurements", FLIM), zur Multiphotonenmikroskopie, Weitfeld- und Rasterbildgebung und -tomografie, und/oder als optische Pinzette und für andere strahlungsabhängige Probenbehandlungsverfahren wie z.B. für Polymerisationsverfahren geeignet.

Bekannte optische Systeme mit mehreren Detektoren weisen im Unendlichkeitsbereich einer Linsenanordnung Strahlteiler auf und entlang des Strahlengangs zwischen Strahlteiler und Detektor eine Tubuslinse für jeden Detektor. Diese bekannten Systeme haben den Vorteil, dass die Strahlteiler im Unendlichkeitsbereich angeordnet sind und daher Verzerrungen durch die Strahlteiler keinen großen Einfluss auf die von den Detektoren detektierten Signale haben. Diese optischen Systeme haben den Nachteil, dass sie nur unter großem Aufwand zu justieren sind, da jede Tubuslinse einzeln ausgerichtet werden muss.

Die EP 2 615 967 B1 beschreibt ein Mikroskop für multimodale optische Schnitte, mit dem gleichzeitig Licht mittels Vollfeld-OCT und Fluoreszenz-Mikroskopie detektiert werden kann. Das detektierte Licht wird durch ein Objektiv und eine Tubuslinse fokussiert, wobei im Unendlichkeitsbereich zwischen Objektiv und Tubuslinse Strahlteiler angeordnet sind, um die detektierten Signale optisch mit einer Laufzeitreferenz zu koppeln.

Die EP 3 614 191 A1 beschreibt ein Mikroskop mit zwei Lichtquellen, die Licht unterschiedlicher Spektralbereiche auf eine Probe einstrahlen. Das in einem Objektiv eingefangene Licht wird von einer Tubuslinse auf einen Strahlteiler fokussiert. Der Strahlteiler lässt Licht eines ersten Spektralbereichs zu einem ersten Detektor durch und lenkt Licht eines zweiten Spektralbereichs in Richtung auf einen zweiten Detektor um. Beide Detektoren sind mit einer Analyzer-Einheit verbunden, die aus den jeweils detektierten Bildern ein gemeinsames Bild mit verbessertem Kontrast erzeugt.

Die US 2017/059299 A1, US 2012/113431 A1 und EP 2 615 967 B1 beschreiben jeweils Biomikroskope zur optischen Kohärenztomographie, in deren Detektionseinheit eine Tubuslinse angeordnet ist, die das Licht fokussiert, wobei nach der Tubuslinse Strahlteiler angeordnet sind, die das Licht auf mehrere Detektoren umlenken.

Zheng et al., Optics Letters Vol. 43, No. 7 (2018) beschreiben zur Messung der polarisierten Internen Totalreflexionsfluoreszenz (TIRF) ein Mikroskop, dessen Anregungslicht mit einem über zwei Achsen scannenden Galvanometer gesteuert wird. Durch das Anregungslicht wird eine im Messbereich angeordnete Probe zur Fluoreszenz angeregt. Das Fluoreszenzlicht tritt durch einen dirchroitischen Spiegel hindurch und wird von einer Kamera detektiert (vgl. D5, S. 1424, linke Sp., Abs. 2-3, sowie Fig. 1).

Bigelow et al., Review of Scientific Instruments 79, 123707 (2008) beschreiben zur Multiphotonenmikroskopie ein Laserscanning-Mikroskop, dessen Lichtstärke dadurch gesteuert ist, dass im Anregungsstrahlengang eine Wellenplatte und ein polarisierter Strahlteiler angeordnet sind. Ein CCD-Detektor misst die auf seine Detektionsfläche treffenden Photonen.

Georgescu et al., Applied Optics Vol. 57, No. 34 (2018) beschreiben das Steuern der Laserintensität in einem Mikroskop dadurch, dass zwei Teilprismen gegeneinander verschoben werden, um entweder Licht durchzulassen oder im Inneren des Prismas zu reflektieren (FTIR).

Israelsen et al., Light: Science & Applications, Vol. 8, No. 11 (2019) beschreiben ein OCT-Messsystem, dessen Strahlengang teilweise durch optische Fasern gebildet wird. Einziger Detektor ist ein CMOS-Spektrometer.

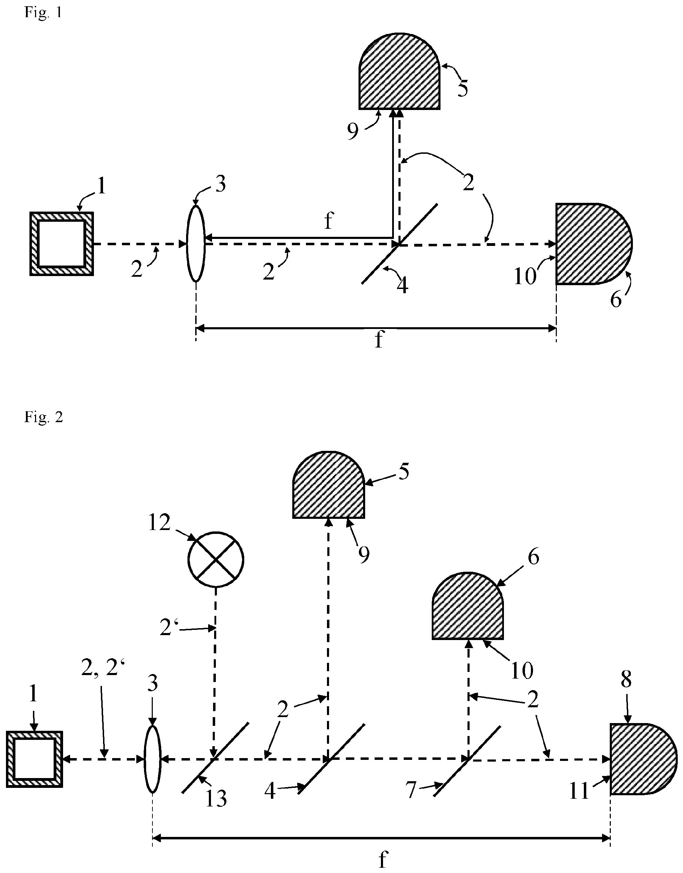

Lodhi et al., Proc. of SPIE, Vol. 10211, 1021108 (2017) beschreiben den grundsätzlichen Aufbau eines Detektionsstrahlengangs mit optischen Fasern und zeigen in Fig. 2 einen Strahlengang mit zwei fokussierenden Linsen.

Randy Wayne, "Light and Video Microscopy", 2nd edition (2014) beschreibt, dass die Auflösung eines Objektivs dadurch erhöht werden kann, dass dessen Linse in eine Immersionsflüssigkeit getaucht wird.

Die US 2017/336329 A1 beschreibt eine Anordnung zur Korrektur eines Laserstrahls, bei der die Strahlungsrichtung einer stationären Strahlungsquelle mittels eines motorangetriebenen Spiegels gesteuert verändert werden kann.

### Aufgabe der Erfindung

Der Erfindung stellt sich die Aufgabe, ein alternatives optisches System zum Detektieren von Strahlung aus einer Probe bzw. zum Behandeln einer Probe mit Strahlung bereitzustellen. Insbesondere stellt sich der Erfindung die Aufgabe, ein optisches System bereitzustellen, das einfacher zu konstruieren ist als herkömmliche Systeme und das zur Kombination von verschiedenen Detektoren und Strahlungsquellen, jeweils bevorzugt mit eigenen Einrichtungen zur Kontraststeigerung, geeignet ist.

### Beschreibung der Erfindung

Die Erfindung löst die Aufgabe mit den Merkmalen der Ansprüche und stellt insbesondere ein optisches System zum Detektieren von Strahlung aus einem Messbereich bereit, mit zumindest einer Strahlungsquelle zum Erzeugen von Strahlung entlang eines Anregungsstrahlengangs, der Strahlung von der Strahlungsquelle zu dem Messbereich führt, und mit einem Detektionsstrahlengang, der Strahlung von dem Messbereich auf zumindest einen ersten und einen zweiten Detektor führt, wobei entlang des Detektionsstrahlengangs nacheinander genau eine Tubuslinse mit einem ersten und einem gegenüberliegenden zweiten Ende, ein erster Strahlteiler, ein erster Detektor in Reflexionsrichtung des ersten Strahlteilers und ein zweiter Detektor in Durchlassrichtung des ersten Strahlteilers angeordnet sind, wobei der erste Detektor eine erste Detektionsfläche aufweist und der zweite Detektor eine zweite Detektionsfläche, die von der ersten Detektionsfläche beabstandet ist,
und die erste und die zweite Detektionsfläche entlang des Detektionsstrahlengangs in demselben Abstand zum zweiten Ende der Tubuslinse angeordnet sind.

Dadurch, dass der erste Strahlteiler im Detektionsstrahlengang nach der Tubuslinse angeordnet ist, hat das optische System den Vorteil, dass es einfach zu justieren ist, z.B. einfacher zu justieren ist als optische Systeme mit mehreren Tubuslinsen.

Das optische System hat weiter den Vorteil, dass es für Messungen von Strahlung aus biologischem Gewebe, insbesondere für Messungen der optischen Biopsie, insbesondere konfokale optische Kohärenztomografie (OCT), Vollfeld-OCT, konfokale Raman-Spektroskopie, phasen- und polarisierungsbasierte Bildgebung und Tomografie, Fluoreszenzmikroskopie, Multiphotonenmikroskopie, Resonanzenergietransfer (FRET), Fluoreszenzlebensdauer (FLIM), oder als optische Pinzette bzw. optisches Skalpell, gleichzeitig für denselben Messbereich eingerichtet ist.

Das optische System weist genau eine Tubuslinse mit einem ersten und einem gegenüberliegenden zweiten Ende auf, die in dem Detektionsstrahlengang zwischen dem Messbereich und dem ersten Strahlteiler angeordnet ist. Die Tubuslinse ist mit ihrem ersten Ende in Richtung auf den Messbereich ausgerichtet, und mit ihrem zweiten Ende in Richtung auf den ersten Strahlteiler.

Generell ist bevorzugt, dass die genau eine Tubuslinse entlang des Detektionsstrahlengangs ortsfest zu dem ersten Strahlteiler angeordnet ist.

Gemäß der beanspruchten Erfindung ist die genau eine Tubuslinse im Anregungsstrahlengang zwischen der Strahlungsquelle und dem Messbereich angeordnet. In dieser Ausführungsform ist die genau eine Tubuslinse sowohl im Anregungsstrahlengang als auch im Detektionsstrahlengang angeordnet und Anregungsstrahlengang und Detektionsstrahlengang verlaufen zumindest abschnittsweise auf demselben Lichtpfad. In dieser Ausführungsform hat das optische System den Vorteil, dass es platzsparend, z.B. vollständig in einem Gehäuse angeordnet werden kann.

Die genau eine Tubuslinse kann als konvexe Linse mit einer Öffnung (Apertur) mit einem Durchmesser ausgebildet sein, sodass entlang des Detektionsstrahlengangs die auf das erste Ende der Tubuslinse treffende Strahlung durch die Tubuslinse gebrochen wird und nach der Tubuslinse in einem Abstand vom zweiten Ende der Tubuslinse, der die Brennweite der Tubuslinse ist, fokussiert wird und in einem Abstand vom zweiten Ende der Tubuslinse, der der Arbeitsabstand der Tubuslinse ist, ein Bild erzeugt wird. Bevorzugt weist die Tubuslinse einen Arbeitsabstand von zumindest 10 mm, bevorzugt zumindest 100 mm bis zu 500 mm, bevorzugt bis zu 200 mm auf. Der Arbeitsabstand der genau einen Tubuslinse ist bevorzugt ausreichend, um die für die jeweilige Anwendung nötigen Detektoren und Strahlungsquellen in voneinander beabstandeten konjugierten Bild- bzw. Objektebenen, abhängig von der Anwendung, anordnen zu können, sobald die Strahlteiler passiert wurden. Für diese Anwendung ist die praktische Grenze für den Arbeitsabstand der Tubuslinse gleich dem Durchmesser der Apertur der Tubuslinse.

Optional ist die Apertur der genau einen Tubuslinse geringer als ihr Durchmesser, z.B. durch einen um die genau eine Tubuslinse angeordneten Blendenrahmen, der eingerichtet ist, dass nur der mittlere Bereich und nicht die Randbereiche der Tubuslinse bestrahlt werden. Dadurch hat die genau eine Tubuslinse den Vorteil, dass optische Imperfektionen in ihren Randbereichen, die in der Regel fertigungsbedingt sind, überdeckt sind und die Strahlung nicht umlenken, sodass weniger optische Unreinheiten von den Detektoren detektiert werden, ohne dass der Arbeitsabstand der genau einen Tubuslinse geändert wird.

Bevorzugt weist das optische System im Detektionsstrahlengang vor der genau einen Tubuslinse eine Linsenanordnung als Objektiv mit einem ersten und einem davon beabstandeten zweiten Ende auf, die zwischen sich eine Längsachse aufspannen. Bevorzugt sind die Linsen des Objektivs jeweils entlang der Längsachse voneinander beabstandet. Generell ist das Objektiv mit seinem ersten Ende in Richtung auf den Messbereich und mit seinem zweiten Ende in Richtung auf die genau eine Tubuslinse ausgerichtet. Das Objektiv kann ein Mikroskopobjektiv, z.B. ein Immersionsobjektiv, sein, oder ein Kameraobjektiv mit mehreren Linsen.

Generell ist die Tubuslinse, oder optional das Objektiv, das bevorzugt vor der Tubuslinse angeordnet ist, in einem Abstand zum Messbereich angeordnet, der gleich dem Arbeitsabstand der genau einen Tubuslinse oder optional des Objektivs ist. Dann wird die vom Messbereich ausgehende Strahlung durch die Tubuslinse und optional das Objektiv gebrochen und in einem Abstand nach der genau einen Tubuslinse, der die Bildweite der Tubuslinse ist, ein Bild erzeugt. Generell ist bevorzugt, dass die Detektoren mit ihren Detektionsflächen in einem Abstand zu der genau einen Tubuslinse angeordnet sind, der gleich der Bildweite der Tubuslinse ist, sodass die Detektionsflächen des optischen Systems in der Bildebene der genau einen Tubuslinse angeordnet sind.

Bevorzugt sind entlang des Detektionsstrahlengangs zwischen dem ersten und dem zweiten Ende des Objektivs keine Strahlteiler angeordnet. Bevorzugter besteht das Objektiv aus Linsen und optional Reflektoren.

In der Ausführungsform mit einem Objektiv weist das optische System in seinem Detektionsstrahlengang im Bereich zwischen dem ersten Ende des Objektivs und dem zweiten Ende der Tubuslinse bevorzugt einen Unendlichkeitsbereich auf, d.h. dass die Strahlung zumindest abschnittsweise parallel zur Längsachse des Objektivs strahlt. Dadurch hat das optische System den Vorteil, dass beim Ändern des Abstands zwischen erstem Ende des Objektivs und zweitem Ende der Tubuslinse die Bildweite der Tubuslinse unverändert bleibt und deshalb die Strahlteiler und Detektoren nicht erneut ausgerichtet werden müssen.

Die Linsen des Objektivs können fixiert oder verschieblich zu der genau einen Tubuslinse gelagert sein. In der Ausführungsform mit zueinander verschieblichen Linsen hat das optische System den Vorteil, dass der Abstand des Messbereichs zum ersten Ende des Objektivs beliebig angepasst werden kann, ohne den Messbereich auf die Tubuslinse zu bzw. von der Tubuslinse weg zu bewegen, z.B. ohne die Vergrößerung und Auflösung des optischen Systems zu verändern.

Das optische System weist eine Strahlungsquelle zum Erzeugen von Strahlung entlang eines Anregungsstrahlengangs auf. Die Strahlungsquelle ist bevorzugt zum Erzeugen von Strahlung eingerichtet, die eine Wellenlänge von zumindest 1 nm, bevorzugt zumindest 5 nm oder zumindest 100 nm bis zu 10.000 nm, bevorzugt bis zu 2.000 nm aufweist, insbesondere für die Fluoreszenzmikroskopie eine Wellenlänge von zumindest 300 nm bis zu 800 nm, für Multi-Photon-Fluoreszenz und/oder Frequenzverdopplung und/oder stimulierte Raman-Spektroskopie eine Wellenlänge von zumindest 600 nm bis zu 1.600 nm, für optische Pinzetten eine Wellenlänge von zumindest 1.000 nm bis zu 2.000 nm, und/oder für optische Skalpelle eine Wellenlänge von zumindest 100 nm bis zu 10.000 nm. Die von der Strahlungsquelle erzeugte Strahlung kann bevorzugt, insbesondere für Vollfeld-OCT, eine niedrige Kohärenzlänge und/oder, insbesondere für stimulierte Raman-Spektroskopie, eine geringe spektrale Bandbreite aufweisen.

Die Strahlungsquelle kann eine Punktlichtquelle oder eine diffuse Lichtquelle sein und ist bevorzugt ausgewählt unter Femtosekundenlasern, Pikosekundenlasern, gepulsten Lasern, Dauerstrichlasern, Swept-Source-Lasern, abstimmbaren Lasern, LED-Lichtquellen, superlumineszenten LED-Lichtquellen, optischen Pinzetten bzw. Laserskalpellen, Entladungslampen, Wärmestrahlungsquellen oder einer Kombination von zumindest zwei von diesen.

Die Strahlungsquelle ist gemäß der beanspruchten Erfindung gesteuert verfahrbar in dem optischen System angeordnet, z.B. als gesteuert verfahrbare Lichtleitfaser. In dieser Ausführungsform ist die Strahlungsquelle entlang zweier Achsen verfahrbar, die zueinander gewinkelt sind und eine Ebene aufspannen, die sich im rechten Winkel zum Anregungsstrahlengang erstreckt. In dieser Ausführungsform ist das optische System bevorzugt eingerichtet, dass durch Verfahren der Strahlungsquelle nacheinander Teile des Messbereichs bestrahlt, insbesondere abgerastert werden, bzw. dass die Strahlungsquelle ausgerichtet werden kann, z.B. mittels einer Lokalisierungseinrichtung.

Optional weist das optische System mehrere Strahlungsquellen auf, die z.B. eingerichtet sein können, dass sie gleichzeitig oder nacheinander Strahlung entlang jeweils eines Anregungsstrahlengangs in Richtung auf den Messbereich erzeugen. Die Anregungsstrahlengänge verschiedener Strahlungsquellen können voneinander beabstandet sein oder sich zumindest abschnittsweise überlagern. In dieser Ausführungsform ist bevorzugt für jede Strahlungsquelle zumindest ein Strahlteiler in ihrem Anregungsstrahlengang angeordnet, der die Strahlung in Richtung auf den Messbereich umlenkt.

Weiter optional weist das optische System zumindest ein optisches Element auf, das im Anregungsstrahlengang angeordnet ist und eingerichtet ist, die von der Strahlungsquelle erzeugte Strahlung nacheinander auf Teile des Messbereichs zu richten. In dieser Ausführungsform ist das optische System eingerichtet, dass der Messbereich dadurch bestrahlt wird, dass Teile des Messbereichs nacheinander, z.B. durch Abrastern, bestrahlt werden. Das optische Element kann ein Strahlteiler sein, insbesondere z.B. ein digitaler oder analoger Mikrospiegelaktor, oder kann ein räumlicher Linsenmodulator (SLM) oder ein Flüssigkristall, ein Scannerspiegel oder zumindest eine gesteuert verfahrbare Lichtleitfaser sein, oder kann eine Nipkow-Scheibe sein.

Alternativ kann das optische System eingerichtet sein, dass der Messbereich dadurch bestrahlt wird, dass er gleichzeitig auf seiner gesamten Fläche gleichmäßig oder strukturiert bestrahlt wird. Hierbei ist bevorzugt, dass das optische System in seinem Anregungsstrahlengang ein in der Bildebene der genau einen Tubuslinse angeordnetes optisches Element aufweist, das zur Erzeugung einer strukturierten Bestrahlung eingerichtet ist, z.B. ein Beugungsgitter, wobei bevorzugt die von dem optischen Element erzeugte Periode des Musters, z.B. die Teilungsperiode der Gitterstruktur, kleiner ist als die Beugungsgrenze der Strahlung, insbesondere kleiner als die halbe Wellenlänge der durch ein Beugungsgitter auf den Messbereich gestrahlten Strahlung. Weiter bevorzugt ist das optische Element in dieser Ausführungsform um eine Achse längs zum Anregungsstrahlengang bzw. längs zur optischen Achse rotierbar gelagert und das optische System eingerichtet, dass innerhalb einer vollständigen Rotation des optischen Elements um seine Achse zumindest 3 Bilder in unterschiedlichen Rotationswinkeln des optischen Elements auf den Detektionsflächen der Detektoren detektiert werden. In dieser Ausführungsform hat das optische System den Vorteil, dass es zum Erzeugen von Bildern mit einer höheren räumlichen Auflösung, bevorzugt unterhalb der Beugungsgrenze der auf den Messbereich eingestrahlten Strahlung, eingerichtet ist.

Erfindungsgemäß weist das optische System einen im Anregungsstrahlengang angeordneten Strahlteiler auf, der die Strahlung in Richtung auf das zweite Ende der Tubuslinse und dahinter den Messbereich richtet. Dabei ist das optische System eingerichtet, dass die von der Strahlungsquelle erzeugte Strahlung im Anregungsstrahlengang durch die genau eine Tubuslinse geführt wird. In dieser Ausführungsform hat das optische System den Vorteil, dass es platzsparend ist und z.B. die optischen Elemente des optischen Systems, insbesondere Tubuslinse, Strahlteiler und Detektoren in einem gemeinsamen Gehäuse angeordnet werden können. In dieser

Ausführungsform kann die Strahlungsquelle im Gehäuse angeordnet werden, oder kann außerhalb des Gehäuses angeordnet werden und kann z.B. die Strahlung mittels einer Faser oder eines Periskops in das Gehäuse geführt werden.

Bevorzugt ist die Strahlungsquelle eingerichtet, optische Strahlung mit zumindest zwei voneinander verschiedenen Wellenlängen und/oder verschiedenen Polarisationen gleichzeitig oder nacheinander abzugeben.

Gemäß dem beanspruchten Gegenstand weist das optische System in seinem Anregungsstrahlengang einen Strahlteiler auf, der die Strahlung teilweise in Richtung auf den Messbereich und teilweise in Richtung auf den ersten und/oder zweiten Detektor richtet. In dieser Ausführungsform ist das optische System eingerichtet, dass sich die von der Strahlungsquelle erzeugte Strahlung zumindest teilweise in den Detektionsstrahlengang ausbreitet.

Optional weist das optische System in seinem Anregungsstrahlengang einen Strahlteiler auf, der die Strahlung teilweise in Richtung auf einen ersten Messbereich und teilweise in Richtung auf einen vom ersten Messbereich beabstandeten zweiten Messbereich richtet. In dieser Ausführungsform ist das optische System eingerichtet, gleichzeitig oder nacheinander Strahlung aus mehreren voneinander beabstandeten Messbereichen zu detektieren.

Die von der Strahlungsquelle erzeugte Strahlung wird durch den Anregungsstrahlengang auf einen Messbereich geführt. Der Messbereich ist in einem Abstand zum ersten Ende der Tubuslinse bzw. zum ersten Ende des Objektivs angeordnet, der bevorzugt gleich dem Arbeitsabstand der Tubuslinse oder optional des zwischen dem Messbereich und dem ersten Ende der Tubuslinse angeordneten Objektivs ist und der die Objektebene definiert. Die Strahlung aus dem Anregungsstrahlengang wird im Messbereich zumindest teilweise absorbiert, gebeugt, gestreut oder reflektiert und dadurch als vom Messbereich ausgehende Strahlung, die z.B. reflektierte, harmonisierte, gebeugte oder emittierte Strahlung ist, zumindest teilweise in Richtung auf das erste Ende der Tubuslinse umgelenkt.

Im Verfahren zur Messung von Strahlung mit dem optischen System kann in den Messbereich eine Probe angeordnet werden. Bei Anordnung einer Probe in den Messbereich ist das optische System eingerichtet, von der Probe ausgehende Strahlung, d.h. von der Probe in Richtung auf das erste Ende der Tubuslinse reflektierte, harmonisierte, gebeugte oder emittierte Strahlung zu detektieren, insbesondere im ersten und/oder zweiten Detektor zu detektieren. Die Probe kann eine biologische Probe sein, z.B. Gewebe, insbesondere Tumorgewebe, oder kann eine Probe sein, von der die Entfernung zu dem ersten bzw. zweiten Detektor des optischen Systems zu bestimmen ist.

Im Verfahren zur Messung von Strahlung mit dem optischen System kann sich die Probe in Richtung entlang des Detektionsstrahlengangs erstrecken. In dieser Ausführungsform ist das optische System bevorzugt eingerichtet, Strahlung aus einem Fokusbereich zu detektieren, der sich entlang der Objektebene auf oder in der Probe erstreckt. In dieser Ausführungsform ist der Messbereich der Fokusbereich auf oder in der Probe und ist vom ersten Ende der Tubuslinse bzw. vom ersten Ende des Objektivs durch einen Arbeitsabstand beabstandet. Der Fokusbereich weist bevorzugt eine Ausdehnung entlang des Detektionsstrahlengangs auf, die kleiner als 50 µm, bevorzugt kleiner als 10 µm ist. In der Ausführungsform des optischen Systems mit zueinander verschieblichen Linsen des Objektivs und im Messbereich angeordneter Probe kann die Probe ortsfest zur genau einen Tubuslinse festgelegt sein, sodass das optische System eingerichtet ist, die Fokusebene und damit den Fokusbereich durch Verschieben der Linsen des Objektivs zueinander zu verschieben, ohne die Probe auf die Tubuslinse zu bzw. von der Tubuslinse weg zu bewegen. Alternativ kann die Probe verschieblich zu der genau einen Tubuslinse gelagert sein, sodass das optische System eingerichtet ist, den Fokusbereich durch Verschieben der Probe relativ zu der genau einen Tubuslinse zu verschieben.

In der Ausführungsform, in der die optischen Elemente des optischen Systems in einem gemeinsamen Gehäuse angeordnet sind, kann das optische System in dem gemeinsamen Gehäuse eine Einrichtung aufweisen, die zum Festlegen des Abstands zwischen dem Messbereich und dem ersten Ende der Tubuslinse eingerichtet ist, z.B. einen Abstandhalter für Probe tragende Objektträger, der eingerichtet ist, dass eine Probe in festem Abstand vor der genau einen Tubuslinse in dem gemeinsamen Gehäuse angeordnet werden kann. In dieser Ausführungsform ist das optische System bevorzugt eingerichtet, dass der Messbereich in festem Abstand vor der genau einen Tubuslinse in dem gemeinsamen Gehäuse angeordnet ist, sodass eine zu vermessende Probe in dem gemeinsamen Gehäuse angeordnet werden kann. Dadurch hat das optische System den Vorteil, dass eine Probe in einem vorbestimmten Abstand zum ersten Ende der Tubuslinse angeordnet und vermessen werden kann. Weiter bevorzugt ist der Messbereich in dieser Ausführungsform senkrecht zu dem Detektionsstrahlengang gesteuert verfahrbar, sodass das optische System eingerichtet ist, nacheinander Teile des Messbereichs zu bestrahlen bzw. abzurastern, ohne dass die Strahlungsquelle bzw. ein Spiegel oder Strahlteiler bewegt wird.

Von dem Messbereich ausgehende Strahlung wird zumindest teilweise von dem Detektionsstrahlengang aufgenommen, der die genau eine Tubuslinse aufweist. Das optische System ist generell eingerichtet, dass die vom Messbereich ausgehende Strahlung entlang des Detektionsstrahlengangs in das erste Ende der Tubuslinse eintritt und am gegenüberliegenden zweiten Ende der Tubuslinse austritt und auf den ersten Strahlteiler fällt, in dessen Reflexionsrichtung ein erster Detektor und in dessen Durchlassrichtung ein zweiter Detektor angeordnet sind.

Ausgehend vom Messbereich sind entlang des Detektionsstrahlengangs nacheinander optional ein Objektiv, die genau eine Tubuslinse, der erste Strahlteiler und in dessen Reflexionsrichtung ein erster Detektor und in Durchlassrichtung ein zweiter Detektor angeordnet. Durch die Anordnung der Strahlteiler entlang des Detektionsstrahlengangs nach der Tubuslinse hat das optische System den Vorteil, dass nur eine Tubuslinse benötigt wird und auszurichten ist, um vom Messbereich ausgehende Strahlung mit zumindest zwei Detektoren zu detektieren.

Optional sind entlang des Detektionsstrahlengangs zwischen dem Messbereich und der genau einen Tubuslinse, bzw. zwischen dem ersten und dem zweiten Ende des Objektivs, keine optischen Elemente außer Linsen angeordnet, bzw. ausschließlich Linsen angeordnet. In dieser Ausführungsform hat das optische System den Vorteil, dass außer der Tubuslinse keine weiteren Linsen zum Detektieren von Strahlung aus dem Messbereich angeordnet und ausgerichtet werden müssen.

Optional ist der Detektionsstrahlengang zumindest abschnittsweise mit Flüssigkeit gefüllt. In dieser Ausführungsform kann der Detektionsstrahlengang zwischen dem Messbereich und dem ersten Ende der Tubuslinse bzw. zwischen dem Messbereich und dem ersten Ende des Objektivs mit Flüssigkeit gefüllt sein, wobei bevorzugt das Objektiv ein Immersionsobjektiv ist. In dieser Ausführungsform weist der Detektionsstrahlengang in dem flüssigkeitsgefüllten Abschnitt einen anderen Brechungsindex auf, der z.B. gleich dem Brechungsindex von biologischem Gewebe, insbesondere menschlichem Gewebe, z.B. Haut ist. Dadurch hat das optische System den Vorteil, dass von einer Probe, insbesondere einer biologischen Gewebeprobe ausgehende Strahlung besser detektiert werden kann als ohne zumindest abschnittsweise flüssigkeitsgefüllten Detektionsstrahlengang. In dieser Ausführungsform ist das optische System optional eingerichtet, dass der flüssigkeitsgefüllte Abschnitt des Detektionsstrahlengangs reversibel befüllbar bzw. entleerbar ist, sodass mit dem optischen System nacheinander Messungen durchgeführt werden können, einmal mit einem zumindest abschnittsweise flüssigkeitsgefüllten Detektionsstrahlengang und einmal mit einem Detektionsstrahlengang, der luftgefüllt bzw. leer und nicht flüssigkeitsgefüllt ist.

In einer bevorzugten Ausführungsform weist das optische System in seinem Anregungsstrahlengang einen Strahlteiler auf, der von der Strahlungsquelle ausgehende Strahlung in Richtung auf das zweite Ende der Tubuslinse und dahinter den Messbereich umlenkt. In dieser Ausführungsform verläuft der Anregungsstrahlengang durch die Tubuslinse.

Weiter optional ist im Detektionsstrahlengang und/oder Anregungsstrahlengang zumindest abschnittsweise eine Faser mit einem ersten und einem zweiten Ende angeordnet. Die Faser ist generell eine Lichtleitfaser. Lichtleitfasern sind generell eingerichtet, dass Licht im Bereich zwischen ihrem ersten und zweiten Ende geführt wird und bevorzugt das in ihnen geführte Licht an ihrer Oberfläche bzw. an Reflexionsflächen reflektiert wird und daher nur aus dem ersten und/oder zweiten Ende der Lichtleitfaser herausdringt. Bevorzugt ist die Faser aus Glas und/oder weist Silikat auf. Insbesondere kann die Faser als Wellenleiter ausgebildet sein. Bevorzugt ist der Detektionsstrahlengang zumindest abschnittsweise durch die Faser gebildet.

Eine Faser kann z.B. einen Abschnitt des Detektionsstrahlengangs bilden. Insbesondere kann eine Faser zumindest einen Abschnitt des Detektionsstrahlengangs bilden, der sich vor der Tubuslinse erstreckt, z.B. einen Abschnitt, der Licht vom Messbereich zur genau einen Tubuslinse bzw. zum ersten Ende des Objektivs führt.

Alternativ oder zusätzlich kann sich eine Faser in die Detektionsebene eines Detektors erstrecken oder diese bilden und kann optional entlang zweier Achsen verfahrbar sein und dadurch eine Scaneinrichtung bilden.

An eine Faser kann eine Strahlungsquelle angeschlossen sein, sodass die Faser zum Erzeugen von Strahlung entlang eines Anregungsstrahlengangs eingerichtet ist. In dieser Ausführungsform bildet die Faser die Strahlungsquelle. Gemäß der beanspruchten Erfindung ist eine durch eine Faser gebildete Strahlungsquelle gesteuert angetrieben verfahrbar, z.B. durch eine Rastereinrichtung verfahrbar, bevorzugter entlang zumindest zweier Achsen verfahrbar, die eine zu ihrem Anregungsstrahlengang senkrechte Ebene aufspannen. Alternativ oder zusätzlich kann eine durch eine Faser gebildete Strahlungsquelle drehbar bzw. neigbar sein.

Eine Faser kann zumindest einen Strahlteiler aufweisen oder bilden, sodass die Faser eingerichtet ist, Strahlung aus der Faser heraus umzulenken bzw. entlang der Faser umzulenken.

Eine Faser kann aus einem Kern bestehen, der von einer Ummantelung ummantelt ist, sodass das in ihr geführte Licht in ihrer Ummantelung gesammelt wird, indem es an den Übergangsflächen zwischen Kern und Ummantelung reflektiert wird. Bevorzugt ist die Ummantelung lichtleitend. Weiter bevorzugt weist eine ummantelte Faser mehrere Mantelschichten auf und ist z.B. als Mantelfaser (Multi-Cladding-Fiber) oder ummantelter Wellenleiter ausgebildet.

Eine ummantelte Faser kann einen Kern aufweisen, durch den Licht aus einer Strahlungsquelle geführt wird. Durch das gleichzeitige Beleuchten des Messbereichs aus dem Kern der Faser und Sammeln des vom Messbereich ausgehenden Lichts in der Ummantelung der Faser kann eine solche Faser als Endoskop oder als Referenzlichtpfad für relative Entfernungsmessungen wirken.

Eine Faser kann an einem ihrer Enden senkrecht zu ihrer Längsachse eine Linse aufweisen, die sich über ihren Querschnitt erstreckt. Insbesondere kann sich die Linse ausschließlich über den Bereich des ummantelten Kerns einer ummantelten Faser erstrecken, sodass die Linse sich nicht über den Mantel der Faser erstreckt. Alternativ kann sich die Linse über den vollständigen Querschnitt einer Faser, bevorzugt einschließlich der Ummantelung einer ummantelten Faser, und/oder darüber hinaus erstrecken.

Alternativ oder zusätzlich kann eine Faser an einem ihrer Enden senkrecht zu ihrer Längsachse einen Reflektor aufweisen, der sich zumindest abschnittsweise über ihren Querschnitt erstreckt. Insbesondere sich der Reflektor ausschließlich über den Bereich der Ummantelung einer ummantelten Faser erstrecken, sodass der Reflektor sich nicht über den Kern der Faser erstreckt. Alternativ kann sich der Reflektor über den vollständigen Querschnitt einer Faser, bevorzugt einschließlich der Ummantelung einer ummantelten Faser, und/oder darüber hinaus erstrecken.

In einer bevorzugten Ausführungsform weist das optische System eine ummantelte Faser auf, die an ihrem ersten Ende einen im Bereich der Ummantelung angeordneten Reflektor und an demselben Ende eine im Bereich des ummantelten Kerns angeordnete Linse aufweist. In dieser Ausführungsform ist die Faser bevorzugt im Detektionsstrahlengang zwischen dem Messbereich und der Tubuslinse angeordnet und mit ihrem ersten Ende in Richtung auf den Messbereich ausgerichtet, und ist im Bereich ihrer Ummantelung zur Bestimmung einer Laufzeit als Referenzwert eingerichtet, so dass die Faser zur Verwendung in Messverfahren, die einen Referenzwert benötigen, eingerichtet ist. Ein Referenzwert kann z.B. Strahlung zugeordnet werden, die nicht auf den Messbereich trifft, z.B. einer internen Kalibrierung, z.B. der Laufzeit zwischen Aussenden der Strahlung durch die Strahlungsquelle und Detektieren der vom Reflektor zurückgeworfenen Strahlung. Dann kann z.B. die zu Entfernung zu einem im Messbereich angeordneten Objekt, das die Strahlung reflektiert, durch Vergleichen der Lichtlaufzeit mit dem Referenzwert bestimmt werden.

Die Faser, insbesondere wenn sie einen Abschnitt des Detektionsstrahlengangs vor dem ersten Ende der Tubuslinse bildet, kann eine Länge von zumindest 1 m, bevorzugt zumindest 10 m aufweisen. Ein solches optisches System weist bevorzugt einen Detektor auf, der eingerichtet ist, mit einer Detektionsrate von zumindest 50 MHz Signale zu detektieren, um Laufzeiten bzw. Laufzeitdifferenzen zwischen dem Mantel und dem Kern der Faser zu bestimmen. Bevorzugt ist der Detektor in dieser Ausführungsform eingerichtet, dass seine Detektionsrate eine Entfernungsbestimmung von Objekten ermöglicht, die zumindest um die Länge der Faser von seiner Detektionsfläche beabstandet sind. In dieser Ausführungsform ist das optische System weiter zur Detektion mehrerer Pulse von Strahlung und damit zur wiederholten Entfernungsbestimmung, insbesondere zur Bestimmung einer Bewegungsgeschwindigkeit des Messbereichs zu dem optischen System eingerichtet. Ein solcher Detektor kann z.B. den ersten oder den zweiten Detektor bilden.

Das optische System weist einen ersten Strahlteiler auf, der im Detektionsstrahlengang nach der genau einen Tubuslinse und vor dem ersten bzw. zweiten Detektor angeordnet ist. Strahlteiler sind generell eingerichtet, die Strahlung, die z.B. aus Licht besteht, zumindest teilweise in eine Reflexionsrichtung umzulenken, z.B. zu reflektieren und/oder zu beugen, und zumindest teilweise in eine Durchlassrichtung durch den Strahlteiler durchzulassen. Dabei kann die Strahlung eine vom Messbereich ausgehende bzw. durch die Tubuslinse geführte Strahlung entlang des Detektionsstrahlengangs sein, oder kann eine von der Strahlungsquelle ausgehende Strahlung entlang des Anregungsstrahlengangs sein.

Im Gegensatz zu herkömmlichen optischen Systemen ist der erste Strahlteiler erfindungsgemäß im Detektionsstrahlengang nicht im Bereich vor einer Tubuslinse angeordnet, sondern innerhalb des Arbeitsabstands nach der genau einen Tubuslinse. Überraschenderweise ist ein optisches System mit der erfindungsgemäßen Anordnung von genau einer Tubuslinse, einem ersten Strahlteiler und zumindest einem ersten und einem zweiten Detektor geeignet, Strahlung aus einem Messbereich in platzsparender Bauweise zu detektieren.

Insbesondere ist der erste Strahlteiler eingerichtet, Strahlung in seiner Reflexionsrichtung in Richtung auf einen ersten Detektor umzulenken und in seiner Durchlassrichtung zu einem zweiten Detektor durchzulassen.

Optional weist das optische System zusätzlich einen zweiten Strahlteiler auf, der entlang des Detektionsstrahlengangs nach dem ersten Strahlteiler angeordnet ist und in dessen Reflexionsrichtung und/oder Durchlassrichtung zumindest ein Detektor angeordnet ist. Weiter optional kann das optische System weitere Strahlteiler aufweisen, die entlang des Detektionsstrahlengangs und/oder Anregungsstrahlengangs angeordnet sein können und in deren Reflexions- bzw. Durchlassrichtung weitere Detektoren und/oder Strahlungsquellen und/oder andere optische Elemente wie z.B. Reflektoren angeordnet sein können.

Insbesondere können die Strahlteiler eingerichtet sein, vorbestimmte Anteile der Strahlung umzulenken bzw. durchzulassen, z.B. Licht eines vorbestimmten Wellenlängenbereichs durchzulassen und Licht einer Wellenlänge außerhalb des vorbestimmten Bereichs umzulenken, oder Licht bestimmter Polarisierung durchzulassen und Licht mit einer anderen Polarisierung umzulenken, oder Licht zu vorbestimmten Zeitpunkten durchzulassen und zu anderen Zeitpunkten umzulenken, oder Licht aus einer Richtung durchzulassen und Licht aus einer anderen, z.B. gegenüberliegenden, Richtung zumindest teilweise umzulenken.

Generell bevorzugt sind die Strahlteiler entlang des Detektionsstrahlengangs in einem Abstand zum zweiten Ende der Tubuslinse angeordnet, der kleiner ist als der Arbeitsabstand der Tubuslinse.

Die Strahlteiler sind generell in einem Winkel zum Detektionsstrahlengang angeordnet, wobei der Winkel z.B. ein rechter Winkel sein kann, oder ein Winkel von z.B. zumindest 1°, bevorzugt zumindest 20°, 30°, 40°, bis zu 60° oder bis zu 80°, bevorzugt von 45° sein kann.

Bevorzugt sind die Strahlteiler, voneinander unabhängig verschieden oder gleich, ausgewählt unter Würfelprismen, halbdurchlässigen Spiegeln, Reflexionsstrahlteilern, Mikrospiegelaktoren, Pellikelstrahlteilern, Scanning-Linsen, räumlichen Lichtmodulatoren (SLM), faseroptischen Teilern, optischen Zirkulatoren, wellenlängenabhängigen chromatischen Strahlteilern oder Interferenzstrahlteilern, z.B. mit festem oder stellbarem Interferenzmuster, oder Fabry-Pérot-Resonatoren.

Bevorzugt weisen die Strahlteiler einen Wellenfrontfehler von maximal einem Viertel, bevorzugt maximal einem Achtel oder maximal einem Zehntel der Wellenlänge der von dem Strahlteiler umgelenkten Strahlung auf. Die Strahlteiler können ausgewählt sein, dass die von ihnen erzeugten Wellenfrontfehler durch die ausgewählten Strahlteiler reduziert werden, z.B. durch adaptive Optik, z.B. durch verformbare Spiegel und/oder Linsen, oder durch festgelegte korrigierende optische Elemente in dem Detektionsstrahlengang zwischen dem zweiten Ende der Tubuslinse und dem ersten und/oder zweiten Detektor. Alternativ oder zusätzlich können die von den Strahlteilern erzeugten Wellenfrontfehler durch Kombinieren bestimmter Strahlteiler reduziert werden.

In einer Ausführungsform kann zumindest ein Strahlteiler als optischer Schalter ausgebildet sein, der eingerichtet ist, das Umlenken oder Durchlassen von Strahlung zu steuern, insbesondere abhängig von einem vorbestimmten Signal zu steuern. Das Signal kann ein Signal für die Laufzeit von Photonen sein (LIDAR), oder ein Interferenzsignal zum Bestimmen der Tiefe oder der relativen Distanz zwischen Strukturen (OCT), oder ein Signal für eine relative Änderung der Strahlungsintensität, oder ein Signal für eine Änderung der Strahlungspolarisierung. In dieser Ausführungsform kann das Umlenken oder Durchlassen z.B. dadurch gesteuert sein, dass sich die Mikrospiegel eines Mikrospiegelaktors gesteuert neigen oder die Teilprismen eines Würfelprismas mittels z.B. eines Piezoaktuators gesteuert angetrieben sind, dass z.B. die jeweiligen Hypotenusen jedes Teilprismas eines optischen Schalters aus Teilprismen voneinander weg bzw. aufeinander zu bewegt oder aufeinander gepresst werden können, um den Anteil an durchgelassener bzw. umgelenkter Strahlung dynamisch zu steuern, wobei insbesondere die auf den optischen Schalter treffende Strahlung vollständig reflektiert bzw. umgelenkt wird, wenn der Abstand zwischen den jeweiligen Hypotenusen der Teilprismen größer ist als die Wellenlänge der auf den optischen Schalter treffenden Strahlung, wobei der Anteil an durchgelassener Strahlung bei Verringerung des Abstandes zwischen den jeweiligen Hypotenusen der Teilprismen zunimmt, und wobei nahezu die komplette Strahlung vom optischen Schalter durchgelassen wird, wenn die jeweiligen Hypotenusen der Teilprismen aneinander anliegen.

In einer weiteren Ausführungsform kann zumindest ein Strahlteiler als Faser ausgebildet sein. In dem optischen System ist im Detektionsstrahlengang vor der genau einen Tubuslinse bevorzugt kein Strahlteiler angeordnet, bevorzugter sind in dem optischen System im Detektionsstrahlengang vor der Tubuslinse keine optischen Elemente außer Linsen angeordnet.

Das optische System kann entlang des Anregungsstrahlengangs zumindest einen Strahlteiler aufweisen, der eingerichtet ist, die von der Strahlungsquelle ausgehende Strahlung in Richtung auf den Messbereich umzulenken. In dieser Ausführungsform ist die genau eine Tubuslinse gemäß der beanspruchten Erfindung im Anregungsstrahlengang angeordnet. Ferner weist das optische System entlang des Anregungsstrahlengangs zwischen der Strahlungsquelle und der genau einen Tubuslinse zumindest einen Strahlteiler auf, der eingerichtet ist, die von der Strahlungsquelle ausgehende Strahlung in Richtung auf das zweite Ende der genau einen Tubuslinse umzulenken. Dadurch hat das optische System den Vorteil, dass es raumsparend konstruiert werden kann.

Bevorzugt ist ein im Anregungsstrahlengang angeordneter Strahlteiler eingerichtet, dass die von der Strahlungsquelle ausgehende Strahlung auf einen Teil des Messbereichs trifft und nicht auf den gesamten Messbereich, z.B. durch gesteuertes Verdrehen des Strahlteilers und/oder durch Umlenken der Strahlung von einer gesteuert verfahrbaren Strahlungsquelle, die z.B. eine Faser sein kann.

Das optische System kann zumindest einen Strahlteiler entlang des Anregungsstrahlengangs zwischen dem Messbereich und der Tubuslinse aufweisen, z.B. zwischen dem Messbereich und dem ersten Ende der genau einen Tubuslinse und/oder zwischen dem Messbereich und dem ersten Ende des Objektivs und/oder zwischen dem ersten und dem zweiten Ende des Objektivs und/oder als Teil eines Michelson-Interferometers. In dieser Ausführungsform ist das optische System bevorzugt eingerichtet, dass der Strahlteiler die auf ihn treffende Strahlung teilweise in Richtung auf einen Spiegel, z.B. einen Piezospiegel, umzulenken, der eingerichtet ist, die auf ihn treffende Strahlung zu reflektieren, sodass die Strahlung zurück auf den Strahlteiler und weiter in den Detektionsstrahlengang fällt. Der Strahlteiler ist in dieser Ausführungsform bevorzugt eingerichtet, die vom Messbereich ausgehende Strahlung entlang des Detektionsstrahlengangs in Richtung auf die Detektoren durchzulassen, und der Spiegel ist bevorzugt entlang des Anregungsstrahlengangs im gleichen Abstand zum Strahlteiler wie der Messbereich angeordnet, insbesondere im gleichen Abstand wie die Fokusebene des Messbereichs. Der Spiegel kann zu dem Strahlteiler verschieblich gelagert und bevorzugt gesteuert verfahrbar sein. Dann hat das optische System den Vorteil, dass die Fokusebene im Messbereich entlang des Detektionsstrahlengangs verschieblich ist und z.B. optische Schnittansichten durch ein Gewebe detektiert werden können. In dieser Ausführungsform kann das optische System z.B. ein Michelson-Interferometer und bevorzugt einen Detektor für kohärentes Licht aufweisen und zur Detektion von Strahlung mittels optischer Kohärenztomografie eingerichtet sein.

Das optische System weist im Detektionsstrahlengang Detektoren auf, gemäß der beanspruchten Erfindung einen ersten Detektor mit einer ersten Detektionsfläche und einen zweiten Detektor mit einer zweiten Detektionsfläche. Die Detektoren sind im Detektionsstrahlengang nach dem ersten Strahlteiler angeordnet, wobei der erste Detektor in Reflexionsrichtung des Strahlteilers und der zweite Reflektor in Durchlassrichtung des ersten Strahlteilers angeordnet ist.

Die Detektionsfläche eines Detektors ist in seiner Detektionsebene angeordnet. Die Detektionsebenen bzw. Detektionsflächen verschiedener Detektoren sind erfindungsgemäß voneinander beabstandet und entlang des Detektionsstrahlengangs im gleichen Abstand zum zweiten Ende der genau einen Tubuslinse angeordnet.

Generell sind die Detektoren eingerichtet, Strahlung zu detektieren. Dabei kann die Strahlung vom Messbereich ausgehende Strahlung sein, die entlang des Detektionsstrahlengangs geführt ist, oder von der Strahlungsquelle ausgehende Strahlung, die aus dem Anregungsstrahlengang durch einen Strahlteiler in den Detektionsstrahlengang umgelenkt wurde und nicht durch die Tubuslinse geführt wurde.

Insbesondere sind die Detektoren bevorzugt eingerichtet, optische Strahlung dadurch zu detektieren, dass sie auf ihre Detektionsfläche auftreffende Photonen in zumindest ein elektrisches Signal umwandeln. Alternativ können die Detektoren eingerichtet sein, optische Strahlung dadurch zu detektieren, dass sie die in ihrer Detektionsebene abgebildete Strahlung in einer Scanlinse aufnehmen und in Richtung auf einen Wandler umlenken, der auftreffende Photonen in zumindest ein elektrisches Signal umwandelt. Die Detektoren können eingerichtet sein, dass die Strahlung zumindest teilweise durch die Detektionsfläche dringen kann und/oder von der Detektionsfläche umgelenkt, z.B. reflektiert werden kann.

In einer Ausführungsform kann ein Detektor eingerichtet sein, dass die auf seine Detektionsfläche treffende Strahlung durch die Detektionsfläche dringt und von einer Scanlinse auf einen Scanspiegel fokussiert wird, der die Strahlung durch eine Kollimatorlinse in Richtung auf eine CCD-Fläche als Wandler umlenkt. In dieser Ausführungsform ist das optische System bevorzugt dadurch zur Signalverstärkung eingerichtet, dass die von seiner Strahlungsquelle ausgehende Strahlung nacheinander Teile des Messbereichs abrastert und die auf Teile der Detektionsfläche des Detektors umgelenkte Strahlung durch die Scanlinse und Kollimatorlinse so umgelenkt und fokussiert wird, dass sie vollflächig auf die gesamte CCD-Fläche trifft.

Optional sind die Detektoren unabhängig voneinander oder gleich eingerichtet, dass sie nur diejenige Strahlung detektieren, die eine vorbestimmte Wellenlänge und/oder Polarisation aufweist, und/oder die zu einem vorbestimmten Zeitpunkt und/oder aus einer bestimmten Richtung auf den Detektor fällt.

Zumindest einer der Detektoren kann sich über seine Detektionsfläche hinaus im Detektionsstrahlengang erstrecken. Insbesondere kann zumindest ein Detektor entlang des Detektionsstrahlengangs vor und/oder nach seiner Detektionsfläche optische und/oder elektronische Elemente aufweisen, die zum Erzeugen und/oder Umlenken und/oder Reflektieren und/oder Führen von Strahlung, und/oder zum Verstärken elektronischer Signale geeignet sind, z.B. Strahlungsquellen, Fasern, Strahlteiler, Reflektoren, Blenden und/oder Linsen. Z.B. kann ein Detektor einen Referenzarm aufweisen und/oder zur Laufzeitmessung von Strahlung eingerichtet sein.

Die Detektionsflächen verschiedener Detektoren sind jeweils voneinander beabstandet. Insbesondere ist die zweite Detektionsfläche des zweiten Detektors von der ersten Detektionsfläche des ersten Detektors beabstandet. In der Ausführungsform, in der das optische System einen dritten Detektor und/oder weitere Detektoren aufweist, weisen diese Detektionsflächen auf, die jeweils voneinander und von denen des ersten und zweiten Detektors beabstandet sind.

Jeder Detektor ist mit seiner Detektionsfläche in einem Winkel, der bevorzugt ein rechter Winkel ist, zum Detektionsstrahlengang im Detektionsstrahlengang angeordnet. Bevorzugt sind die Detektoren so in dem Detektionsstrahlengang angeordnet, dass die Strahlung senkrecht auf ihre Detektionsfläche fällt.

Bevorzugt weisen die Detektoren, jeweils unabhängig voneinander oder gleich, Einrichtungen zur Kontraststeigerung des detektierten Signals und/oder zum Reduzieren von Rauschen, z.B. Schrotrauschen auf, z.B. Photoelektronenvervielfacher oder Blenden.

Die Detektoren sind bevorzugt, jeweils unabhängig voneinander oder gleich, ausgewählt unter OCT-Detektoren, Raman-Detektoren, Photodioden, Fluoreszenzdetektoren, XY-Detektionsarmen, Punktdetektoren wie z.B. Photodioden, Lawinenphotodioden oder einer Anordnung dieser, oder Flächendetektoren, oder insbesondere ladungsgekoppelte Detektoren (CCD), optional mit Elektronenmultiplikator (EMCCD), oder komplementäre Metalloxid-Halbleiter (CMOS, sCMOS). Die Detektoren können eingerichtet sein, alternativ oder zusätzlich zeitabhängige oder modulierte Signale zu detektieren.

Erfindungsgemäß sind die Detektoren mit ihren Detektionsflächen entlang des Detektionsstrahlengangs im Wesentlichen in demselben Abstand vom zweiten Ende der Tubuslinse angeordnet. Insbesondere sind die erste und die zweite Detektionsfläche des ersten bzw. zweiten Detektors in demselben Abstand vom zweiten Ende der Tubuslinse angeordnet. Bevorzugt ist der Abstand der Detektionsflächen, insbesondere der ersten und zweiten Detektionsfläche, vom zweiten Ende der Tubuslinse entlang des Detektionsstrahlengangs gleich dem Arbeitsabstand der genau einen Tubuslinse. Dadurch hat das optische System den Vorteil, dass alle Detektoren ein fokussiertes Bildsignal detektieren, ohne dass für jeden Detektor eine eigene Tubuslinse angeordnet und ausgerichtet werden muss.

Optional kann das optische System zusätzlich einen dritten Detektor aufweisen und weiter optional weitere Detektoren aufweisen. In der Ausführungsform des optischen Systems mit drei Detektoren ist bevorzugt, dass der dritte Detektor eine von der ersten und zweiten Detektionsfläche beabstandete dritte Detektionsfläche aufweist, wobei die dritte Detektionsfläche entlang des Detektionsstrahlengangs in demselben Abstand wie die erste und zweite Detektionsfläche zum zweiten Ende der Tubuslinse angeordnet ist, und dass das optische System einen zweiten Strahlteiler aufweist, der entlang des Detektionsstrahlengangs nach dem ersten Strahlteiler angeordnet ist und in dessen Durchlass- bzw. Reflexionsrichtung der dritte Detektor angeordnet ist.

In der Ausführungsform, in der das optische System einen dritten Detektor aufweist, ist der dritte Detektor in einer von der ersten und zweiten Detektionsfläche beabstandeten dritten Detektionsfläche angeordnet, wobei die dritte Detektionsfläche erfindungsgemäß entlang des Detektionsstrahlengangs in demselben Abstand wie die erste und zweite Detektionsfläche vom zweiten Ende der genau einen Tubuslinse angeordnet ist.

Weiter optional sind die Detektoren austauschbar in dem Detektionsstrahlengang angeordnet, z.B. in Form von lösbaren und festlegbaren Detektorkassetten. In dieser Ausführungsform ist bevorzugt ein Detektor mit seiner Detektionsfläche in einem vorbestimmten Abstand vom zweiten Ende der Tubuslinse festlegbar, z.B. durch einen Abstandhalter, und kann gegen einen anderen Detektor ausgetauscht werden, dessen Detektionsfläche in demselben Abstand vom zweiten Ende der Tubuslinse festlegbar ist. In dieser Ausführungsform hat das optische System den Vorteil, dass Detektoren auf einfache Weise gegeneinander ausgetauscht werden können und das System daher einfach an eine bestimmte Anwendung angepasst werden kann.

In einer bevorzugten Ausführungsform weist zumindest ein Detektor in seiner Detektionsfläche eine Faser auf und im Detektionsstrahlengang vor der Detektionsfläche einen Strahlteiler bzw. Spiegel. In dieser Ausführungsform ist die Faser bevorzugt als Detektionsfläche ausgebildet und weiter bevorzugt entlang zweier Achsen gesteuert verfahrbar, sodass eine in den Messbereich angeordnete Probe durch Verfahren der Faser abgerastert werden kann. In dieser Ausführungsform ist die Faser optional zusätzlich ummantelt und eingerichtet, aus ihrem ummantelten Kern Strahlung in Richtung auf den Strahlteiler und dahinter den Messbereich zu strahlen und vom Messbereich ausgehende Strahlung in ihre Ummantelung aufzunehmen und zu detektieren. Zum Detektieren von Strahlung aus dem Messbereich wird ein Teilbereich des Messbereichs mit von der Faser abgestrahltem Licht bestrahlt und die reflektierte bzw. emittierte Strahlung aus diesem Bereich wird von der Faser detektiert. Durch anschließendes Verfahren der Faser kann das Bestrahlen und Detektieren für einen weiteren Teilbereich des Messbereichs wiederholt werden. Durch das punktuelle Bestrahlen und Detektieren hat das optische System in dieser Ausführungsform den Vorteil, dass Licht aus anderen Teilbereichen des Messbereichs nicht detektiert wird und somit ein rauscharmes Signal von dem Detektor erzeugt werden kann.

Die hier beschriebenen Bestandteile des optischen Systems, die zur Durchführung eines Verfahrens eingerichtet sind, beschreiben die Verfahrensschritte der mit ihnen durchführbaren Verfahren.

Alternativ optional weist das optische System in der Detektionsfläche zumindest eines Detektors eine entlang zweier Achsen in der Ebene der Detektionsfläche bzw. Detektionsebene verfahrbare Faser auf und ist in dem optischen System eine entlang zweier Achsen gesteuert verfahrbare Strahlungsquelle angeordnet. In dieser Ausführungsform ist das optische System bevorzugt eingerichtet, dass Faser und Strahlungsquelle miteinander koordiniert verfahren werden, sodass ein Teilbereich des Messbereichs von der Strahlungsquelle bestrahlt wird und nur Strahlung aus demselben Teilbereich von der Faser detektiert wird. Zum Detektieren von Strahlung aus dem Messbereich wird ein Bereich des Messbereichs von der Strahlungsquelle mit Licht bestrahlt und die gebeugte, gestreute, reflektierte bzw. emittierte Strahlung aus diesem Bereich wird von der Faser detektiert. Durch anschließendes Verfahren der Faser kann das Bestrahlen und Detektieren für einen weiteren Bereich des Messbereichs wiederholt werden. Durch das punktuelle Bestrahlen und Detektieren hat das optische System in dieser Ausführungsform den Vorteil, dass Licht aus anderen Teilbereichen des Messbereichs nicht detektiert wird und somit ein rauscharmes Signal von dem Detektor erzeugt werden kann.

Weiter optional kann zumindest ein Detektor zumindest abschnittsweise von einer Faser gebildet sein, z.B. in einem Abschnitt, der im Detektionsstrahlengang nach der Detektionsfläche verläuft und in dem Licht von der Detektionsfläche zu einem an dem der Detektionsfläche gegenüberliegenden Ende der Faser angeordneten Reflektor geführt wird und von dem Reflektor reflektiertes Licht zurück zur Detektionsfläche geführt wird. In dieser Ausführungsform kann z.B. ein Detektionsarm eines Detektors für optische Kohärenztomografie (OCT) aus einer Faser gebildet sein und das optische System kann eingerichtet sein, dass die Strahlung von der Strahlungsquelle teilweise von einem Strahlteiler in Richtung von der Tubuslinse weg in den Detektionsstrahlengang umgelenkt wird und daher teilweise nicht durch die Tubuslinse geführt wird.

Gemäß der beanspruchten Erfindung weist das optische System eine Lokalisierungseinrichtung auf, die eingerichtet ist, die Position der Strahlungsquelle, z.B. eines Lasers, entlang zweier Achsen zu bestimmen und auszurichten. Dazu ist die Strahlungsquelle des optischen Systems entlang einer ersten Achse und im Winkel dazu einer zweiten Achse ausgehend von einem Nullpunkt gesteuert verfahrbar, wobei die zwei Achsen eine Ebene im rechten Winkel zum Anregungsstrahlengang der Strahlungsquelle aufspannen und bevorzugt senkrecht zueinander sind. Dazu weist das optische System in dieser Ausführungsform entlang des Anregungsstrahlengangs einen Strahlteiler auf, der eingerichtet ist, die Strahlung der Strahlungsquelle in Richtung auf einen XY-Detektionsarm umzulenken. Der XY-Detektionsarm weist bevorzugt einen Strahlteiler auf, in dessen Reflexionsrichtung und Durchlassrichtung jeweils ein Detektor für die Strahlung der Strahlungsquelle angeordnet ist, wobei der eine Detektor eingerichtet ist, den Ort der auf ihn treffenden Strahlung zu bestimmen und daraus die Verschiebung im Vergleich zum Nullpunkt entlang der ersten Achse zu bestimmen, und der andere Detektor eingerichtet ist, den Ort der auf ihn treffenden Strahlung zu bestimmen und daraus die Verschiebung im Vergleich zum Nullpunkt entlang der zweiten Achse zu bestimmen. Alternativ kann der XY-Detektionsarm zumindest einen Detektor aufweisen, der zum Bestimmen des Ortes der auf ihn treffenden Strahlung und daraus der Verschiebung im Vergleich zum Nullpunkt entlang jeder der zwei Achsen eingerichtet ist, z.B. ein CCD-Detektor oder ein CMOS-Detektor. Weiter weist das optische System in dieser Ausführungsform eine Steuereinrichtung auf, die eingerichtet ist, die Strahlungsquelle abhängig von dem bestimmten Signal der beiden Detektoren entlang der ersten und/oder zweiten Achse in Richtung auf den Nullpunkt zu verfahren. Dabei ist der Nullpunkt bevorzugt ein Punkt, an dem die von der Strahlungsquelle ausgehende Strahlung zumindest anteilig auf die Mitte der Detektionsfläche des ersten und/oder zweiten Detektors strahlt.

In einer weiter bevorzugten Ausführungsform weist das optische System in seinem Detektionsstrahlengang einen zweiten XY-Detektionsarm auf, dessen Steuereinrichtung eingerichtet ist, die Strahlungsquelle eines zweiten optischen Systems abhängig von dem bestimmten Signal der beiden Detektoren des zweiten XY-Detektionsarms entlang der ersten und/oder zweiten Achse in Richtung auf den Nullpunkt zu verfahren. In der Ausführungsform des optischen Systems mit einem ersten und einem zweiten XY-Detektionsarm ist bevorzugt, dass das optische System in einer Anordnung aus einem ersten und einem zweiten optischen System mit einem gemeinsamen Messbereich, der bevorzugt zwischen den zwei optischen Systemen angeordnet ist, angeordnet ist, wobei bevorzugt der Anregungsstrahlengang des ersten optischen Systems durch den gemeinsamen Messbereich in Richtung auf die Tubuslinse des zweiten optischen Systems gerichtet ist und der Anregungsstrahlengang des zweiten optischen Systems durch den gemeinsamen Messbereich in Richtung auf die Tubuslinse des ersten optischen Systems gerichtet ist, sodass sich der Anregungsstrahlengang das ersten optischen Systems und der Detektionsstrahlengang des zweiten optischen Systems auf einem Anteil ihrer Fläche überdecken. Der Anteil der Überdeckung der Flächen kann z.B. durch Lokalisieren der auf die im XY-Detektionsarm angeordneten Detektoren eintreffenden Strahlung bestimmt werden und ist bevorzugt ein Anteil von zumindest 80 %, bevorzugt zumindest 90 %, zumindest 95 % oder zumindest 99 %.

In einer bevorzugten Ausführungsform weist das optische System eine Strahlungsquelle mit einer Faser und einem gesteuerten Scannerspiegel auf, die eingerichtet ist, Strahlung entlang des Anregungsstrahlengangs in Richtung auf den Messbereich zu erzeugen und den Messbereich durch gesteuertes Bewegen des Scannerspiegels mit Strahlung abzurastern.

In einer weiteren Ausführungsform weist das optische System einen Detektor mit einer Faser und einem gesteuerten Scannerspiegel auf, wobei die Faser in der Detektionsfläche des Detektors angeordnet ist und der Detektor eingerichtet ist, dass Teile des Bildsignals nacheinander durch gesteuertes Bewegen des Scannerspiegels in die Faser reflektiert werden.

In einer bevorzugten Ausführungsform für die Detektion von LIDAR-Signalen weist das optische System bevorzugt einen gepulsten Laser als Strahlungsquelle auf, genau eine Tubuslinse, weiterhin eine Faser mit einer Länge von 10 m mit einem ersten Ende und einem gegenüberliegenden zweiten Ende, wobei das erste Ende in Richtung auf den Messbereich gerichtet ist und das zweite Ende in Richtung auf die genau eine Tubuslinse, einen halbdurchlässigen Spiegel als Strahlteiler, einen Lichtpulsdetektor als ersten Detektor und einen weiteren Lichtpulsdetektor als zweiten Detektor, wobei erster und zweiter Detektor jeweils eine Detektionsrate von zumindest 50 MHz aufweisen. Im Anregungsstrahlengang ist ein Strahlteiler zwischen der Strahlungsquelle und der Faser angeordnet, der die Strahlung teilweise auf die Faser und teilweise auf einen in dem Anregungsstrahlengang in einer zum ersten Ende der Faser konjugierten Ebene angeordneten Spiegel richtet, der die auf ihn treffende Strahlung in Richtung auf die genau eine Tubuslinse und dahinter die Detektoren reflektiert.

Im in dieser Ausführungsform durchführbaren Verfahren zum Detektieren von Strahlung aus einem Messbereich mittels LIDAR wird eine Probe, von der die Entfernung zu bestimmen ist, in den Messbereich angeordnet. Von der Strahlungsquelle ausgehende Strahlung wird in dem Anregungsstrahlengang auf den dort angeordneten Strahlteiler gerichtet, der die Strahlung teilweise in Richtung auf das zweite Ende der Faser und teilweise in Richtung auf den Spiegel richtet. Da der Spiegel in einer zum ersten Ende der Faser konjugierten Ebene angeordnet ist, wird die von ihm reflektierte und durch die Tubuslinse und einen ersten Strahlteiler geführte Strahlung im ersten Detektor als Referenzwert für die Laufzeit der Strahlung detektiert. Die durch die Faser zum Messbereich geführte Strahlung wird im Messbereich in Richtung auf das erste Ende der Faser umgelenkt und im Detektionsstrahlengang durch die genau eine Tubuslinse und den ersten Strahlteiler geführt und in dessen Durchlassrichtung auf der Detektionsfläche des zweiten Detektors detektiert und als Wert für die Laufzeit des Lichts bestimmt.

In einer weiteren bevorzugten Ausführungsform für die Detektion von OCT-Signalen weist das optische System eine superlumineszente Diode mit einer mittleren Wellenlänge von zumindest 830 bis zu 1325 nm als Strahlungsquelle auf, weiterhin eine ummantelte Faser mit einem ersten und einem zweiten Ende, die im Detektionsstrahlengang zwischen dem Messbereich und der genau einen Tubuslinse angeordnet ist und an deren erstem, auf den Messbereich gerichteten Ende eine Linse angeordnet ist, die sich über den Querschnitt der Faser erstreckt, und an deren erstem Ende ein Reflektor angeordnet ist, der sich ausschließlich über den Bereich der Ummantelung der Faser erstreckt und nicht über ihren Kern, außerdem genau eine Tubuslinse, einen steuerbaren optischen Schalter als ersten Strahlteiler, in dessen Durchlassrichtung ein Interferenzdetektor als erster Detektor angeordnet ist und in dessen Reflexionsrichtung ein Wellenlängendetektor für die Wellenlänge der Strahlung der superlumineszenten Diode als zweiter Detektor anordnet ist, wobei erster und zweiter Detektor mit ihren Detektionsflächen entlang des Detektionsstrahlengangs im gleichen Abstand zu der genau einen Tubuslinse angeordnet sind.

Im in der bevorzugten Ausführungsform durchführbaren Verfahren zum Detektieren von Strahlung aus einer Probe mittels OCT wird eine Gewebeprobe, z.B. Haut, in den Messbereich angeordnet. Von der Strahlungsquelle ausgehende Strahlung wird durch den Anregungsstrahlengang in das zweite Ende der Faser geführt, wobei sowohl Kern als auch Ummantelung der Faser bestrahlt werden. Die im Kern der Faser geführte Strahlung wird durch die am ersten Ende der Faser angeordnete Linse in Richtung auf die Probe fokussiert und von der Probe in Richtung auf die Faser umgelenkt. Die in der Ummantelung der Faser geführte Strahlung wird durch den am ersten Ende der Faser angeordneten Reflektor reflektiert und in Richtung auf das zweite Ende der Faser umgelenkt. Durch den Detektionsstrahlengang tritt die Strahlung aus dem zweiten Ende der Faser aus und wird durch die genau eine Tubuslinse fokussiert. Von dem ersten Strahlteiler wird die Strahlung teilweise auf den ersten Detektor umgelenkt und teilweise zu dem zweiten Detektor durchgelassen. Durch die Phasenverschiebung zwischen von der Probe umgelenkter Strahlung und von dem Reflektor umgelenkter Strahlung entsteht ein Strahlungsinterferenzmuster, das von dem ersten Detektor detektiert wird. Im zweiten Detektor wird die auf seine Detektionsfläche treffende Strahlung detektiert, die dieselbe Wellenlänge hat wie die von der Strahlungsquelle erzeugte Strahlung. Dadurch ist das optische System eingerichtet, eine Hellfeld-Aufnahme der in den Messbereich angeordneten Probe und eine OCT-Interferenzmessung gleichzeitig zu detektieren.

Die Erfindung wird nun genauer und im Hinblick auf die Figuren beschrieben, die in
- Fig. 1 eine schematische Ansicht einer Ausführungsform des optischen Systems,
- Fig. 2 eine schematische Ansicht einer weiteren Ausführungsform des optischen Systems,
- Fig. 3 eine schematische Ansicht einer Ausführungsform des optischen Systems mit einem Referenzarm,
- Fig. 4 eine schematische Ansicht einer Ausführungsform des optischen Systems mit verfahrbarer Strahlungsquelle und Faser,
- Fig. 5 eine schematische Ansicht einer Ausführungsform des optischen Systems mit verfahrbarer Faser und
- Fig. 6 eine schematische Ansicht einer Ausführungsform des optischen Systems mit XY-Detektionsarm
zeigen. Dabei sind in den Fig. 3-5 der Detektionsstrahlengang 2 und der Anregungsstrahlengang 2' zur besseren Übersicht getrennt dargestellt.

Fig. 1 zeigt eine schematische Ansicht des Detektionsstrahlengangs des optischen Systems zum Detektieren von Strahlung aus einem Messbereich 1 entlang eines Detektionsstrahlengangs 2, der Strahlung von dem Messbereich 1 auf einen ersten Detektor 5 und einen zweiten Detektor 6 führt, wobei entlang des Detektionsstrahlengangs 2 nacheinander genau eine Tubuslinse 3 mit einem ersten und einem gegenüberliegenden zweiten Ende, ein erster Strahlteiler 4, ein erster Detektor 5 in Reflexionsrichtung des ersten Strahlteilers 4 und ein zweiter Detektor 6 in Durchlassrichtung des ersten Strahlteilers 4 angeordnet sind. Der erste Detektor 5 weist eine erste Detektionsfläche 9 auf und der zweite Detektor 6 eine zweite Detektionsfläche 10, die von der ersten Detektionsfläche 9 beabstandet ist. Die erste und die zweite Detektionsfläche 9, 10 sind entlang des Detektionsstrahlengangs 2 in demselben Abstand f zum zweiten Ende der Tubuslinse 3 angeordnet.

Von dem Messbereich 1 ausgehende Strahlung breitet sich entlang des Detektionsstrahlengangs 2 aus und wird durch die Tubuslinse 3 fokussiert. Der in dem Detektionsstrahlengang 2 angeordnete Strahlteiler 4 lenkt einen Teil der Strahlung in seiner Reflexionsrichtung auf den ersten Detektor 5 um und lässt einen Teil der Strahlung in seiner Durchlassrichtung zu dem zweiten Detektor 6 durch. Durch den gleichen Abstand f jeder Detektionsfläche 9, 10 entlang des Detektionsstrahlengangs 2 zum zweiten Ende der Tubuslinse 3 wird eine gleichzeitige Detektion der Strahlung durch die Detektoren 5, 6 ermöglicht.

Fig. 2 zeigt eine schematische Ansicht einer Ausführungsform des optischen Systems mit einer Strahlungsquelle 12, einer Tubuslinse 3, drei Strahlteilern 4, 7, 12 und drei Detektoren 5, 6, 8 mit ihren Detektionsflächen 9, 10, 11. Die Detektionsflächen 9, 10, 11 sind entlang des Detektionsstrahlengangs 2 in demselben Abstand f vom zweiten Ende der Tubuslinse angeordnet.

Von der Strahlungsquelle 12 erzeugte Strahlung wird entlang des Anregungsstrahlengangs 2' geführt und wird durch einen dritten Strahlteiler 13 in Richtung auf die Tubuslinse 3 und den Messbereich 1 umgelenkt. Im Abschnitt zwischen dem Messbereich 1 und dem dritten Strahlteiler 13 verlaufen Anregungsstrahlengang 2' und Detektionsstrahlengang 2 auf demselben Lichtpfad. Von dem Messbereich 1 ausgehende Strahlung wird durch die in dem Detektionsstrahlengang 2 angeordnete Tubuslinse 3 fokussiert. Der in dem Detektionsstrahlengang 2 angeordnete erste Strahlteiler 4 lenkt einen Teil der Strahlung in seiner Reflexionsrichtung auf den ersten Detektor 5 um und lässt einen Teil der Strahlung in seiner Durchlassrichtung zu dem zweiten Strahlteiler 7 durch. Dieser lenkt abermals einen Teil der Strahlung in seiner Reflexionsrichtung zu dem zweiten Detektor 6 um und lässt einen Teil der Strahlung in seiner Durchlassrichtung zum dritten Detektor 8 durch. Durch den gleichen Abstand f jeder Detektionsfläche 9, 10, 11 entlang des Detektionsstrahlengangs 2 zum zweiten Ende der Tubuslinse 3 wird die Strahlung gleichzeitig durch die Detektoren 5, 6, 8 detektiert.

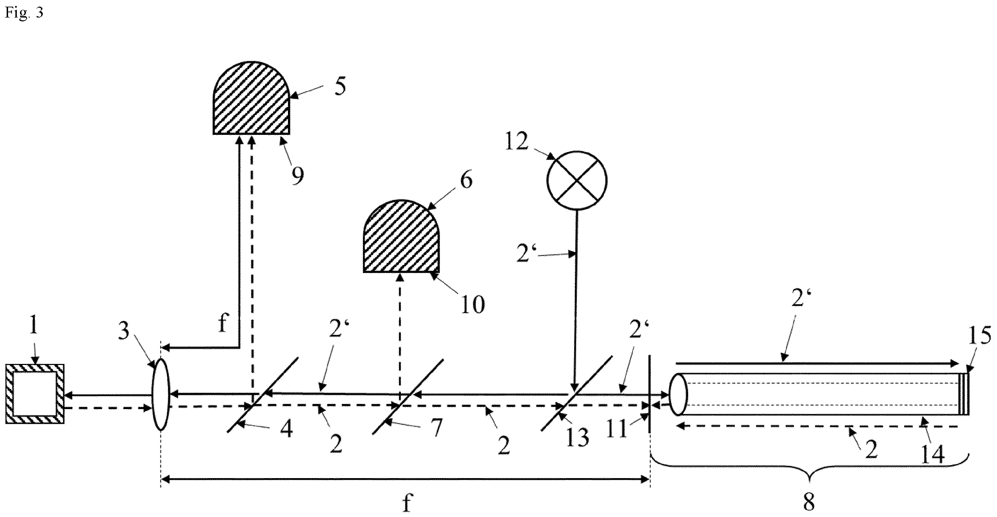

Die Fig. 3 zeigt eine schematische Ansicht einer Ausführungsform des optischen Systems mit einer Strahlungsquelle 12, einer Tubuslinse 3, drei Strahlteilern 4, 7, 12 und drei Detektoren 5, 6, 8 mit ihren Detektionsflächen 9, 10, 11. Die Detektionsflächen 9, 10, 11 sind entlang des Detektionsstrahlengangs 2 in demselben Abstand f vom zweiten Ende der Tubuslinse angeordnet (beispielhaft für die erste und dritte Detektionsfläche 9, 11 gezeigt). Der dritte Detektor 8 erstreckt sich im Detektionsstrahlengang 2 nach seiner Detektionsfläche 11 und weist eine Lichtleitfaser 14 mit einem am darstellungsgemäß rechten Ende angeordneten Reflektor 15 auf.

Von der Strahlungsquelle 12 erzeugte Strahlung breitet sich entlang des Anregungsstrahlengangs 2' aus und wird durch einen dritten Strahlteiler 13 in Richtung auf die Tubuslinse 3 und den Messbereich 1 einerseits und in Richtung auf den dritten Detektor 8 und durch seine Detektionsfläche 11 hindurch umgelenkt. Durch die Lichtleitfaser 14 des dritten Detektors 8 wird die Strahlung entlang des Anregungsstrahlengangs 2' bis zum Reflektor 15 geführt und von diesem reflektiert. Entlang des Detektionsstrahlengangs 2 wird die Strahlung durch das Lichtleitkabel in entgegengesetzter Richtung darstellungsgemäß nach links auf die dritte Detektionsfläche 11 geführt. Dabei ist der Abstand des Reflektors 15 von dem dritten Strahlteiler 13 gleich dem Abstand des dritten Strahlteilers 13 von dem ersten Ende der Tubuslinse 3.

Im Abschnitt zwischen dem Messbereich 1 und dem dritten Strahlteiler 13 verlaufen Anregungsstrahlengang 2' und Detektionsstrahlengang 2 auf demselben Lichtpfad. Von dem Messbereich 1 ausgehende Strahlung wird durch die in dem Detektionsstrahlengang 2 angeordnete Tubuslinse 3 fokussiert. Der in dem Detektionsstrahlengang 2 angeordnete erste Strahlteiler 4 lenkt einen Teil der Strahlung in seiner Reflexionsrichtung auf den ersten Detektor 5 um und lässt einen Teil der Strahlung in seiner Durchlassrichtung zu dem zweiten Strahlteiler 7 durch. Dieser lenkt abermals einen Teil der Strahlung in seiner Reflexionsrichtung zu dem zweiten Detektor 6 um und lässt einen Teil der Strahlung in seiner Durchlassrichtung zum dritten Strahlteiler 13 durch. Dieser lässt einen Teil der Strahlung in seiner Durchlassrichtung zum dritten Detektor 8 durch. Durch den gleichen Abstand f jeder Detektionsfläche 9, 10, 11 entlang des Detektionsstrahlengangs 2 zum zweiten Ende der Tubuslinse 3 wird die Strahlung aus dem Messbereich 1 gleichzeitig von den Detektoren 5, 6, 8 detektiert.

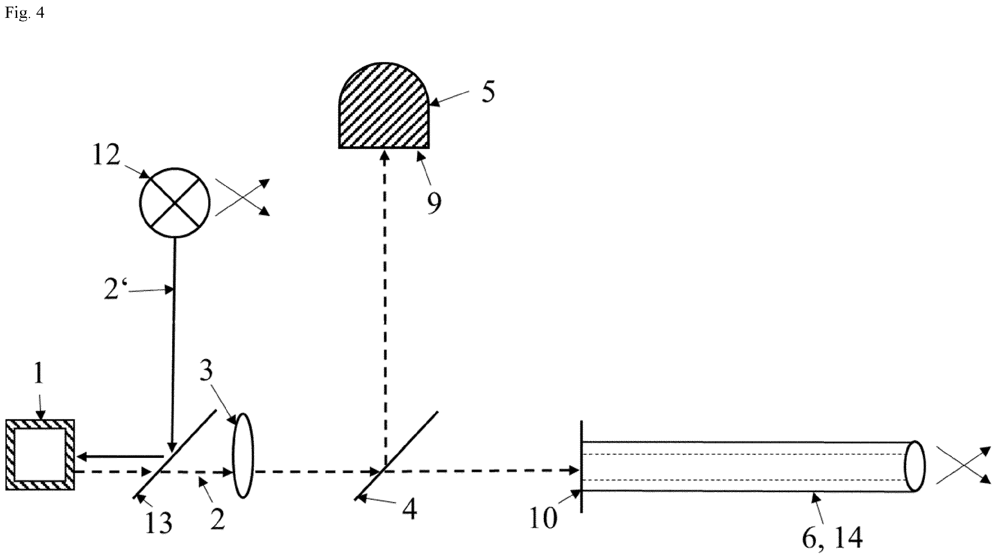

Fig. 4 zeigt das optische System in einer Ausführungsform zum Detektieren von Strahlung aus einem Messbereich 1 entlang eines Detektionsstrahlengangs 2, der Strahlung von dem Messbereich 1 auf einen ersten Detektor 5 und einen zweiten Detektor 6 führt, wobei entlang des Detektionsstrahlengangs 2 nacheinander genau eine Tubuslinse 3 mit einem ersten und einem gegenüberliegenden zweiten Ende, ein erster Strahlteiler 4, ein erster Detektor 5 in Reflexionsrichtung des ersten Strahlteilers 4 und ein zweiter Detektor 6 in Durchlassrichtung des ersten Strahlteilers 4 angeordnet sind. Der erste Detektor 5 weist eine erste Detektionsfläche 9 auf und der zweite Detektor 6 eine zweite Detektionsfläche 10, die von der ersten Detektionsfläche 9 beabstandet ist. In der Detektionsfläche 10 des zweiten Detektors 6 ist eine entlang zweier Achsen verfahrbare Faser 14 angeordnet. Ferner ist in dem optischen System eine entlang zweier Achsen gesteuert verfahrbare Strahlungsquelle 12 angeordnet. Faser 14 und Strahlungsquelle 12 werden miteinander koordiniert verfahren, sodass ein Teilbereich des Messbereichs 1 von der Strahlungsquelle 14 bestrahlt wird und nur Strahlung aus demselben Teilbereich von der Faser 14 detektiert wird. Zum Detektieren von Strahlung aus dem Messbereich 1 wird ein Teilbereich des Messbereichs 1 von der Strahlungsquelle 12 bestrahlt und die reflektierte bzw. emittierte Strahlung aus diesem Teilbereich wird von der Faser 14 detektiert. Durch anschließendes Verfahren der Faser 14 kann das Bestrahlen und Detektieren für einen weiteren Teilbereich des Messbereichs 1 wiederholt werden.

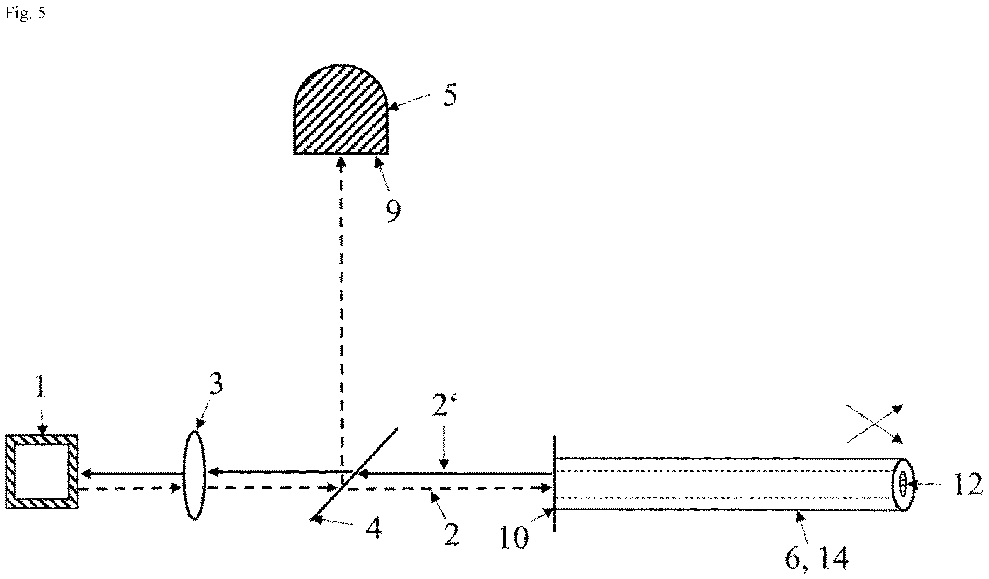

Fig. 5 zeigt eine bevorzugte Ausführungsform des optischen Systems zum Detektieren von Strahlung aus einem Messbereich 1 entlang eines Detektionsstrahlengangs 2, der Strahlung von dem Messbereich 1 auf einen ersten Detektor 5 und einen zweiten Detektor 6 führt, wobei entlang des Detektionsstrahlengangs 2 nacheinander genau eine Tubuslinse 3 mit einem ersten und einem gegenüberliegenden zweiten Ende, ein erster Strahlteiler 4, ein erster Detektor 5 in Reflexionsrichtung des ersten Strahlteilers 4 und ein zweiter Detektor 6 in Durchlassrichtung des ersten Strahlteilers 4 angeordnet sind. Der erste Detektor 5 weist eine erste Detektionsfläche 9 auf und der zweite Detektor 6 eine zweite Detektionsfläche 10, die von der ersten Detektionsfläche 9 beabstandet ist. Der zweite Detektor 6 weist in seiner Detektionsfläche 10 eine Faser 14 auf und im Detektionsstrahlengang 2 vor der Detektionsfläche 10 einen Strahlteiler 4. Die Faser 14 ist entlang zweier Achsen gesteuert verfahrbar, sodass eine in den Messbereich 1 angeordnete Probe durch Verfahren der Faser 14 abgerastert werden kann. Die Faser 14 ist ummantelt und als Strahlungsquelle 12 eingerichtet, aus ihrem ummantelten Kern Strahlung in Richtung auf den Strahlteiler 4 und dahinter den Messbereich 1 zu strahlen und vom Messbereich 1 ausgehende Strahlung in ihre Ummantelung aufzunehmen und zu detektieren. Zum Detektieren von Strahlung aus dem Messbereich 1 wird ein Teilbereich des Messbereichs 1 mit von der Faser 14 abgestrahltem Licht bestrahlt und die reflektierte bzw. emittierte Strahlung aus diesem Bereich wird von der Faser 14 detektiert. Durch anschließendes Verfahren der Faser 14 kann das Bestrahlen und Detektieren für einen weiteren Teilbereich des Messbereichs 1 wiederholt werden.

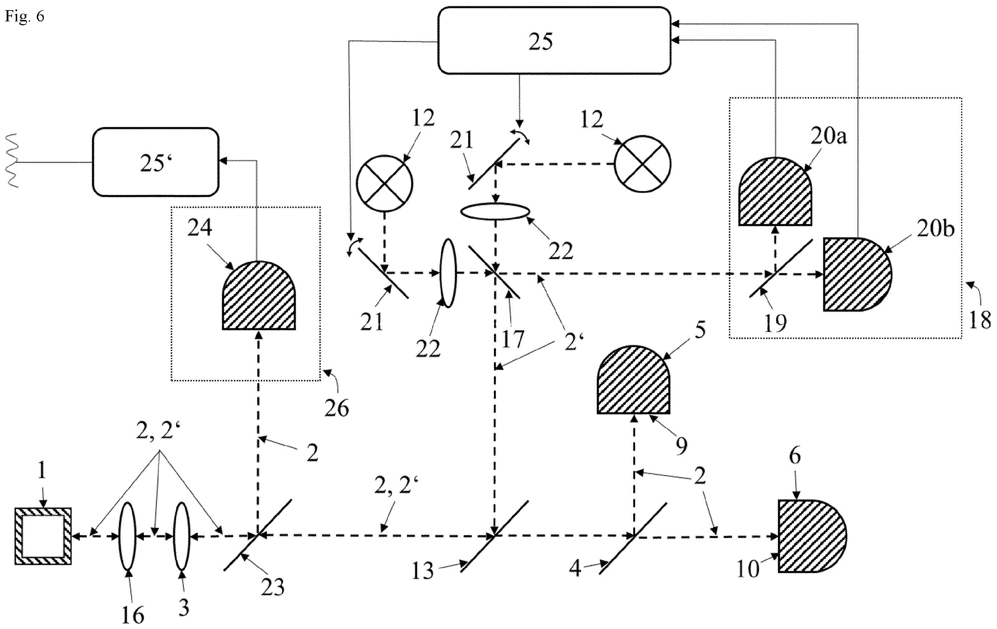

Fig. 6 zeigt eine Ausführungsform des optischen Systems zum Detektieren von Strahlung aus einem Messbereich 1 entlang eines Detektionsstrahlengangs 2, der Strahlung von dem Messbereich 1 auf einen ersten Detektor 5 und einen zweiten Detektor 6 führt, wobei entlang des Detektionsstrahlengangs 2 nacheinander ein Objektiv 16, genau eine Tubuslinse 3 mit einem ersten und einem gegenüberliegenden zweiten Ende, ein erster Strahlteiler 4, ein erster Detektor 5 in Reflexionsrichtung des ersten Strahlteilers 4 und ein zweiter Detektor 6 in Durchlassrichtung des ersten Strahlteilers 4 angeordnet sind. Der erste Detektor 5 weist eine erste Detektionsfläche 9 auf und der zweite Detektor 6 eine zweite Detektionsfläche 10, die von der ersten Detektionsfläche 9 beabstandet ist.

Im optischen System sind gemäß Fig. 6 zwei Strahlungsquellen 12 angeordnet, die dadurch entlang einer ersten Achse und im Winkel dazu einer zweiten Achse ausgehend von einem Nullpunkt gesteuert verfahrbar sind, dass die Strahlungsquellen 12 jeweils einen neigbaren Spiegel 21 und ein Scanobjektiv 22 aufweisen, wobei das Neigen eines Spiegels 21 eine Verschiebung des Anregungsstrahlengangs 2' einer Strahlungsquelle 12 entlang zumindest einer der zwei Achsen erzeugt. Dabei ist der Nullpunkt ein Punkt, an dem die von der Strahlungsquelle 12 ausgehende Strahlung zumindest anteilig auf die Mitte der Detektionsfläche 9, 10 des ersten und/oder zweiten Detektors 5, 6 strahlt. Überdies ist im optischen System in dieser Ausführungsform entlang des Anregungsstrahlengangs 2' ein Strahlteiler 17 angeordnet, der eingerichtet ist, die Strahlung der Strahlungsquelle 12 in Richtung auf einen XY-Detektionsarm 18 umzulenken.

Der XY-Detektionsarm 18 ist eine Lokalisierungseinrichtung, die eingerichtet ist, die Position der Strahlungsquellen 12 entlang zweier Achsen zu bestimmen und auszurichten. Dazu ist in dem XY-Detektionsarm 18 gemäß Fig. 6 ein Strahlteiler 19 angeordnet, in dessen Reflexionsrichtung ein Detektor 20a und in Durchlassrichtung ein Detektor 20b für die Strahlung der Strahlungsquelle 12 angeordnet ist, wobei der eine der Detektoren 20a, 20b eingerichtet ist, den Ort der auf ihn treffenden Strahlung zu bestimmen und daraus die Verschiebung im Vergleich zu einem Nullpunkt entlang der ersten Achse zu bestimmen, und der andere der Detektoren 20a, 20b eingerichtet ist, den Ort der auf ihn treffenden Strahlung zu bestimmen und daraus die Verschiebung im Vergleich zu einem Nullpunkt entlang der zweiten Achse zu bestimmen. Die Detektoren 20a, 20b des XY-Detektionsarms sind mit ihren Detektionsflächen in dieser Ausführungsform in einem Abstand entlang des Anregungsstrahlengangs 2' von den Scanobjektiven 22 angeordnet, der deren Brennweite ist. Ferner weist das optische System eine Steuereinrichtung 25 auf, die eingerichtet ist, die Spiegel 21 abhängig von dem bestimmten Signal der beiden Detektoren 20a, 20b zu neigen und dadurch die Strahlungsquellen 12 entlang der ersten und/oder zweiten Achse in Richtung auf den Nullpunkt zu verfahren.

Weiter weist das optische System in der in Fig. 6 gezeigten Ausführungsform in seinem Detektionsstrahlengang 2 einen zweiten XY-Detektionsarm 26 auf. Strahlung wird durch einen im Detektionsstrahlengang 2 angeordneten Strahlteiler 23 auf den zweiten XY-Detektionsarm umgelenkt und von dessen Detektor 24 der Ort der auf ihn treffenden Strahlung bestimmt und daraus die Verschiebung im Vergleich zu einem Nullpunkt entlang einer ersten und/oder zweiten Achse bestimmt. Die Steuereinrichtung 25' des zweiten XY-Detektionsarms 26 ist eingerichtet, die Strahlungsquelle eines zweiten, in Fig. 6 nicht gezeigten, optischen Systems abhängig von dem bestimmten Signal des Detektors 24 entlang der ersten und/oder zweiten Achse in Richtung auf einen Nullpunkt zu verfahren. Der Detektor 24 ist gemäß Fig. 6 mit seiner Detektionsfläche in einem Abstand zu der genau einen Tubuslinse 3 angeordnet, der deren Brennweite ist. Die Steuereinrichtung 25' des zweiten XY-Detektionsarms 26 ist eingerichtet, die entlang zweier Achsen verfahrbare Strahlungsquelle eines zweiten optischen Systems abhängig von dem bestimmten Signal des Detektors 24 des zweiten XY-Detektionsarms 26 entlang der ersten und/oder zweiten Achse in Richtung auf einen Nullpunkt zu verfahren.

In einer nicht unter den beanspruchten Gegenstand fallenden Alternative zu der in Fig. 6 gezeigten Ausführungsform können die Detektoren 20a, 20b des XY-Detektionsarms 18 von einem einzigen Detektor gebildet sein, analog zur Anordnung des Detektors 24 im zweiten XY-Detektionsarm 26, und kann der Detektor 24 des zweiten XY-Detektionsarms 26 von einer Anordnung aus einem Strahlteiler und zwei Detektoren gebildet sein, analog zur Anordnung des Strahlteilers 19 und der Detektoren 20a, 20b des XY-Detektionsarms 18.

**Bezugsziffernliste**

| | | | |
|---|---|---|---|
| 1 | Messbereich | 11 | dritte Detektionsfläche |
| 2 | Detektionsstrahlengang | 12 | Strahlungsquelle |
| 2` | Anregungsstrahlengang | 13 | dritter Strahlteiler |
| 3 | Tubuslinse | 14 | Lichtleitfaser |
| 4 | erster Strahlteiler | 15 | Reflektor |
| 5 | erster Detektor | 16 | Objektiv |
| 6 | zweite Detektor | 17 | Strahlteiler |
| 7 | zweiter Strahlteiler | 18 | XY-Detektionsarm |
| 8 | dritter Detektor | 19 | Strahlteiler |
| 9 | erste Detektionsfläche | 20a | Detektor |
| 10 | zweite Detektionsfläche | 20b | Detektor |
| 21 | Spiegel | 25 | Steuereinrichtung |
| 22 | Scanobjektiv | 25' | Steuereinrichtung |
| 23 | Strahlteiler | 26 | zweiter XY-Detektionsarm |
| 24 | Detektor | f | Abstand |

## Patentansprüche

1. Optisches System zum Detektieren von Strahlung aus einem Messbereich (1), mit zumindest einer Strahlungsquelle (12) zum Erzeugen von Strahlung entlang eines Anregungsstrahlengangs (2'), der Strahlung von der Strahlungsquelle (12) zu dem Messbereich (1) führt, und mit einem Detektionsstrahlengang (2), der Strahlung vom dem Messbereich (1) auf zumindest einen ersten und einen zweiten Detektor (5, 6) führt, wobei entlang des Detektionsstrahlengangs (2) nacheinander genau eine Tubuslinse (3) mit einem ersten und einem gegenüberliegenden zweiten Ende, ein erster Strahlteiler (4), ein erster Detektor (5) in Reflexionsrichtung des ersten Strahlteilers (4) und ein zweiter Detektor (6) in Durchlassrichtung des ersten Strahlteilers (4) angeordnet sind,
wobei der erste Detektor (5) eine erste Detektionsfläche (9) aufweist und der zweite Detektor (6) eine zweite Detektionsfläche (10), die von der ersten Detektionsfläche (9) beabstandet ist,
und die erste und die zweite Detektionsfläche (9, 10) entlang des Detektionsstrahlengangs (2) in demselben Abstand (f) zum zweiten Ende der Tubuslinse (3) angeordnet sind, **dadurch gekennzeichnet, dass** die Strahlungsquelle (12) des optischen Systems entlang einer ersten Achse und im Winkel dazu einer zweiten Achse ausgehend von einem Nullpunkt gesteuert verfahrbar ist, wobei die zwei Achsen eine Ebene im rechten Winkel zum Anregungsstrahlengang (2') der Strahlungsquelle (12) aufspannen,
wobei das optische System entlang des Anregungsstrahlengangs (2') einen Strahlteiler (17) aufweist, der eingerichtet ist, die Strahlung der Strahlungsquelle (12) in Richtung auf einen XY-Detektionsarm (18) umzulenken,
wobei der XY-Detektionsarm (18) einen Strahlteiler (19) aufweist, in dessen Reflexionsrichtung und Durchlassrichtung jeweils ein Detektor (20a, 20b) für die Strahlung der Strahlungsquelle (12) angeordnet ist, wobei der eine Detektor (20a, 20b) eingerichtet ist, den Ort der auf ihn treffenden Strahlung zu bestimmen und daraus die Verschiebung im Vergleich zum Nullpunkt entlang der ersten Achse zu bestimmen, und der andere Detektor (20a, 20b) eingerichtet ist, den Ort der auf ihn treffenden Strahlung zu bestimmen und daraus die Verschiebung im Vergleich zum Nullpunkt entlang der zweiten Achse zu bestimmen,
und das optische System eine Steuereinrichtung (25) aufweist, die eingerichtet ist, die Strahlungsquelle (12) abhängig von dem bestimmten Signal der beiden Detektoren (20a, 20b) entlang der ersten und/oder zweiten Achse in Richtung auf den Nullpunkt zu verfahren und **dadurch gekennzeichnet, dass** die von Strahlungsquelle (12) erzeugte Strahlung im Anregungsstrahlengang (2') durch die genau eine Tubuslinse (3) geführt wird.

2. Optisches System nach Anspruch 1, **dadurch gekennzeichnet, dass** der Abstand (f) der ersten und zweiten Detektionsfläche (9, 10) zum zweiten Ende der Tubuslinse (3) entlang dem Detektionsstrahlengang (2) gleich dem Arbeitsabstand der genau einen Tubuslinse (3) ist.

3. Optisches System nach einem der voranstehenden Ansprüche, **dadurch gekennzeichnet, dass** im Detektionsstrahlengang (2) vor der genau einen Tubuslinse (3) kein Strahlteiler angeordnet ist.

4. Optisches System nach einem der voranstehenden Ansprüche, **dadurch gekennzeichnet, dass** im Detektionsstrahlengang (2) vor der genau einen Tubuslinse keine optischen Elemente außer Linsen angeordnet sind.

5. Optisches System nach einem der voranstehenden Ansprüche, **gekennzeichnet durch** einen dritten Detektor (8), der eine von der ersten und zweiten Detektionsfläche (9, 10) beabstandete dritte Detektionsfläche (11) aufweist, wobei die dritte Detektionsfläche (11) entlang des Detektionsstrahlengangs (2) in demselben Abstand (f) wie die erste und zweite Detektionsfläche (9, 10) zum zweiten Ende der Tubuslinse (3) angeordnet ist, und **durch** einen zweiten Strahlteiler (7), der entlang des Detektionsstrahlengangs (2) nach dem ersten Strahlteiler (4) angeordnet ist und in dessen Durchlass- bzw. Reflexionsrichtung der dritte Detektor (8) angeordnet ist.

6. Optisches System nach einem der voranstehenden Ansprüche, **dadurch gekennzeichnet, dass** die optischen Elemente des optischen Systems, insbesondere Tubuslinse (3), Strahlteiler (4, 7) und Detektoren (5, 6) in einem gemeinsamen Gehäuse angeordnet sind und das Gehäuse einen Abstandhalter aufweist, der eingerichtet ist, dass eine Probe in festem Abstand vor der genau einen Tubuslinse (3) in dem gemeinsamen Gehäuse angeordnet werden kann.

7. Optisches System nach einem der voranstehenden Ansprüche, **dadurch gekennzeichnet, dass** der Detektionsstrahlengang (2) zumindest abschnittsweise mit Flüssigkeit gefüllt ist.

8. Optisches System nach einem der voranstehenden Ansprüche, **dadurch gekennzeichnet, dass** der Detektionsstrahlengang (2) zumindest abschnittsweise durch eine Faser gebildet ist.

9. Optisches System nach einem der voranstehenden Ansprüche, **dadurch gekennzeichnet, dass** es im Detektionsstrahlengang (2) vor der genau einen Tubuslinse (3) eine Linsenanordnung als Objektiv aufweist, wobei die Linsen des Objektivs verschieblich oder fixiert zu der genau einen Tubuslinse (3) gelagert sind, wobei das optische System in seinem Detektionsstrahlengang (2) im Bereich zwischen dem ersten Ende des Objektivs und dem zweiten Ende der Tubuslinse (3) einen Unendlichkeitsbereich aufweist.

10. Optisches System nach einem der voranstehenden Ansprüche, **dadurch gekennzeichnet, dass** zumindest ein Strahlteiler als optischer Schalter ausgebildet ist, der eingerichtet ist, das Umlenken oder Durchlassen von Strahlung abhängig von einem vorbestimmten Signal zu steuern.

11. Optisches System nach einem der voranstehenden Ansprüche, **dadurch gekennzeichnet, dass** zumindest ein Detektor entlang des Detektionsstrahlengangs (2) vor und/oder nach seiner Detektionsfläche optische Elemente aufweist, die zum Umlenken und/oder Reflektieren und/oder Führen von Strahlung geeignet sind.

12. Optisches System nach einem der voranstehenden Ansprüche, **gekennzeichnet durch** einen zweiten XY-Detektionsarm (26) mit zumindest einem Detektor (24), der eingerichtet ist, den Ort der auf ihn treffenden Strahlung zu bestimmen und daraus die Verschiebung im Vergleich zu einem Nullpunkt entlang einer ersten und/oder zweiten Achse zu bestimmen, und eine Steuereinrichtung (25') eingerichtet ist, die Strahlungsquelle eines zweiten optischen Systems abhängig von dem bestimmten Signal des zumindest einen Detektors (24) des zweiten XY-Detektionsarms (26) entlang einer ersten und/oder zweiten Achse in Richtung auf einen Nullpunkt zu verfahren.

13. Optisches System nach einem der voranstehenden Ansprüche, **dadurch gekennzeichnet,, dass** die Detektoren mit ihren Detektionsflächen in einem Abstand zu der genau einen Tubuslinse angeordnet sind, der gleich der Bildweite der Tubuslinse ist, sodass die Detektionsflächen des optischen Systems in der Bildebene der genau einen Tubuslinse angeordnet sind.

14. Optisches System nach einem der voranstehenden Ansprüche, **dadurch gekennzeichnet, dass** der Messbereich dadurch bestrahlt wird, dass er gleichzeitig auf seiner gesamten Fläche strukturiert bestrahlt wird, wobei das optische System in seinem Anregungsstrahlengang ein in der Bildebene der genau einen Tubuslinse angeordnetes optisches Element aufweist, das zur Erzeugung einer strukturierten Bestrahlung eingerichtet ist.

## Claims

1. Optical system for detecting radiation from a measuring area (1), having at least one radiation source (12) for generating radiation along an excitation beam path (2') which guides radiation from the radiation source (12) to the measuring area (1), and having a detection beam path (2) which guides radiation from the measuring area (1) to at least a first and a second detector (5, 6), wherein along the detection beam path (2) exactly one tube lens (3) having a first end and an opposite second end, a first beam splitter (4), a first detector (5) in the reflection direction of the first beam splitter (4) and a second detector (6) in the transmission direction of the first beam splitter (4) are arranged in succession,
wherein the first detector (5) has a first detection surface (9) and the second detector (6) has a second detection surface (10) which is spaced from the first detection surface (9),
and the first and second detection surfaces (9, 10) are arranged along the detection beam path (2) at the same distance (f) from the second end of the tube lens (3), **characterized in that** the radiation source (12) of the optical system is controlledly movable along a first axis and at an angle thereto along a second axis starting from a zero point, wherein the two axes span a plane at right angles to the excitation beam path (2') of the radiation source (12),
wherein the optical system along the excitation beam path (2') comprises a beam splitter (17) which is configured to redirect the radiation of the radiation source (12) towards an XY detection arm (18),
wherein the XY detection arm (18) comprises a beam splitter (19), in the reflection direction and transmission direction of which one detector (20a, 20b) each for the radiation of the radiation source (12) is arranged, wherein the one detector (20a, 20b) is configured to determine the location of the radiation incident thereon and to determine therefrom the displacement relative to the zero point along the first axis, and wherein the other detector (20a, 20b) is configured to determine the location of the radiation incident thereon and to determine therefrom the displacement relative to the zero point along the second axis,
and the optical system comprises a control device (25) which is configured to move the radiation source (12) along the first and/or second axis towards the zero point in dependence on the determined signal of the two detectors (20a, 20b), and **characterized in that** the radiation generated by radiation source (12) is guided in the excitation beam path (2') through the exactly one tube lens (3).

2. Optical system according to claim 1, **characterized in that** the distance (f) of the first and second detection surfaces (9, 10) to the second end of the tube lens (3) along the detection beam path (2) is equal to the working distance of the exactly one tube lens (3).

3. Optical system according to one of the preceding claims, **characterized in that** no beam splitter is arranged in the detection beam path (2) upstream of the exactly one tube lens (3).

4. Optical system according to one of the preceding claims, **characterized in that** no optical elements other than lenses are arranged in the detection beam path (2) upstream of the exactly one tube lens.

5. Optical system according to any one of the preceding claims, **characterized by** a third detector (8) having a third detection surface (11) that is spaced from the first and second detection surfaces (9, 10), the third detection surface (11) being arranged along the detection beam path (2) at the same distance (f) as the first and second detection surfaces (9, 10) from the second end of the tube lens (3), and by a second beam splitter (7) which is arranged along the detection beam path (2) downstream of the first beam splitter (4) and in the transmission or reflection direction of which the third detector (8) is arranged.

6. Optical system according to one of the preceding claims, **characterized in that** the optical elements of the optical system, in particular the tube lens (3), the beam splitters (4, 7) and the detectors (5, 6) are arranged in a common housing and **in that** the housing comprises a spacer which is configured such that a sample can be arranged at a fixed distance in front of the exactly one tube lens (3) in the common housing.

7. Optical system according to one of the preceding claims, **characterized in that** the detection beam path (2) is at least sectionally filled with liquid.

8. Optical system according to one of the preceding claims, **characterized in that** the detection beam path (2) is at least sectionally formed by a fiber.

9. Optical system according to one of the preceding claims, **characterized in that** it comprises a lens array as an objective in the detection beam path (2) upstream of the exactly one tube lens (3), the lenses of the objective being mounted displaceably or fixedly with respect to the exactly one tube lens (3), wherein the optical system in its detection beam path (2) has an infinity region in the region between the first end of the objective and the second end of the tube lens (3).

10. Optical system according to one of the preceding claims, **characterized in that** at least one beam splitter is formed as an optical switch which is set up to control the redirection or transmission of radiation depending on a predetermined signal.

11. Optical system according to one of the preceding claims, **characterized in that** at least one detector along the detection beam path (2) comprises, upstream and/or downstream of its detection surface, optical elements suitable for redirecting and/or reflecting and/or guiding radiation.

12. Optical system according to one of the preceding claims, **characterized by** a second XY detection arm (26) comprising at least one detector (24) which is configured to determine the location of radiation incident thereon and to determine therefrom the displacement relative to a zero point along a first and/or second axis, and a control device (25') is configured to move the radiation source of a second optical system in dependence on the determined signal of the at least one detector (24) of the second XY detection arm (26) along a first and/or second axis towards a zero point.

13. Optical system according to one of the preceding claims, **characterized in that** the detectors are arranged with their detection surfaces at a distance to the exactly one tube lens which is equal to the image distance of the tube lens, such that the detection surfaces of the optical system are arranged in the image plane of the exactly one tube lens.

14. Optical system according to one of the preceding claims, **characterized in that** the measuring area is irradiated by it simultaneously being irradiated in a structured manner over its entire surface, wherein the optical system in its excitation beam path comprises an optical element arranged in the image plane of the exactly one tube lens, which optical element is set up to generate a structured irradiation.

## Revendications

1. Système optique pour détecter un rayonnement provenant d'une zone de mesure (1), comprenant au moins une source de rayonnement (12) pour générer un rayonnement le long d'un trajet de faisceau d'excitation (2') qui conduit le rayonnement de la source de rayonnement (12) à la zone de mesure (1), et comprenant un trajet de faisceau de détection (2) qui conduit le rayonnement de la zone de mesure (1) à au moins un premier et un deuxième détecteur (5, 6), dans lequel, le long du trajet de faisceau de détection (2), sont disposés successivement exactement une lentille tubulaire (3) avec une première extrémité et une deuxième extrémité opposée, un premier diviseur de faisceau (4), un premier détecteur (5) dans la direction de réflexion du premier diviseur de faisceau (4) et un deuxième détecteur (6) dans la direction de passage du premier diviseur de faisceau (4),
le premier détecteur (5) ayant une première surface de détection (9) et le deuxième détecteur (6) ayant une deuxième surface de détection (10) qui est espacée de la première surface de détection (9),
et la première et la deuxième surface de détection (9, 10) sont disposées le long du trajet du faisceau de détection (2) à la même distance (f) de la deuxième extrémité de la lentille tubulaire (3), **caractérisé en ce que** la source de rayonnement (12) du système optique peut être déplacée de manière commandée le long d'un premier axe et selon un angle par rapport à celui-ci d'un deuxième axe à partir d'un point zéro, les deux axes définissant un plan à angle droit par rapport au trajet du faisceau d'excitation (2') de la source de rayonnement (12),
le système optique comprenant, le long du trajet du faisceau d'excitation (2'), un diviseur de faisceau (17) qui est conçu pour dévier le rayonnement de la source de rayonnement (12) en direction d'un bras de détection XY (18),
le bras de détection XY (18) présentant un diviseur de faisceau (19), dans la direction de réflexion et la direction de passage duquel est disposé respectivement un détecteur (20a, 20b) pour le rayonnement de la source de rayonnement (12), l'un des détecteurs (20a, 20b) étant aménagé, de déterminer l'endroit du rayonnement qui le frappe et d'en déterminer le déplacement par rapport au point zéro le long du premier axe, et l'autre détecteur (20a, 20b) est agencé pour déterminer l'endroit du rayonnement qui le frappe et d'en déterminer le déplacement par rapport au point zéro le long du deuxième axe, et le système optique présente un dispositif de commande (25) qui est conçu pour déplacer la source de rayonnement (12) en fonction du signal déterminé des deux détecteurs (20a, 20b) le long du premier et/ou du deuxième axe en direction du point zéro et **caractérisé en ce que** le rayonnement généré par la source de rayonnement (12) est guidé dans le trajet du rayonnement d'excitation (2') à travers l'unique lentille tubulaire (3).

2. Système optique selon la revendication 1, **caractérisé en ce que** la distance (f) de la première et de la deuxième surface de détection (9, 10) à la deuxième extrémité de la lentille tubulaire (3) le long du trajet du faisceau de détection (2) est égale à la distance de travail de la lentille tubulaire (3) exactement unique.

3. Système optique selon l'une des revendications précédentes, **caractérisé en ce qu'**aucun diviseur de faisceau n'est disposé dans le trajet du faisceau de détection (2) avant la lentille tubulaire (3) exactement unique.

4. Système optique selon l'une des revendications précédentes, **caractérisé en ce qu'**aucun élément optique autre que des lentilles n'est disposé dans le trajet du faisceau de détection (2) en amont de lentille tubulaire exactement unique.

5. Système optique selon l'une des revendications précédentes, **caractérisé par** un troisième détecteur (8) qui présente une troisième surface de détection (11) espacée de la première et de la deuxième surface de détection (9, 10), la troisième surface de détection (11) étant disposée le long du trajet du faisceau de détection (2) à la même distance (f) que la première et la deuxième surface de détection (9, 10) par rapport à la deuxième extrémité de la lentille tubulaire (3), et par un deuxième diviseur de faisceau (7) qui est disposé le long du trajet du faisceau de détection (2) après le premier diviseur de faisceau (4) et dans la direction de transmission ou de réflexion duquel la troisième détecteur (8) est disposée.

6. Système optique selon l'une des revendications précédentes, **caractérisé en ce que** les éléments optiques du système optique, en particulier la lentille tubulaire (3), le diviseur de faisceau (4, 7) et les détecteurs (5, 6) sont disposés dans un boîtier commun et que le boîtier comporte une entretoise qui est agencée de manière à ce qu'un échantillon puisse être disposé à une distance fixe devant la lentille tubulaire (3) exactement unique dans le boîtier commun.

7. Système optique selon l'une des revendications précédentes, **caractérisé en ce que** le trajet du faisceau de détection (2) est rempli de liquide au moins par sections.

8. Système optique selon l'une des revendications précédentes, **caractérisé en ce que** le trajet du faisceau de détection (2) est formé au moins en partie par une fibre.

9. Système optique selon l'une des revendications précédentes, **caractérisé en ce qu'**il présente, dans le trajet du faisceau de détection (2), en amont de la lentille tubulaire (3) exactement unique, un agencement de lentilles en tant qu'objectif, les lentilles de l'objectif étant montées de manière déplaçable ou fixe par rapport à exactement une lentille tubulaire (3), le système optique présentant, dans son trajet du faisceau de détection (2), une zone d'infini dans la zone située entre la première extrémité de l'objectif et la deuxième extrémité de la lentille tubulaire (3).

10. Système optique selon l'une des revendications précédentes, **caractérisé en ce qu'**au moins un diviseur de faisceau est conçu comme un commutateur optique qui est agencé pour commander la déviation ou la transmission du rayonnement en fonction d'un signal prédéterminé.

11. Système optique selon l'une des revendications précédentes, **caractérisé en ce qu'**au moins un détecteur comporte, le long du trajet du faisceau de détection (2), en amont et/ou en aval de sa surface de détection, des éléments optiques aptes à dévier et/ou à réfléchir et/ou à guider le rayonnement.

12. Système optique selon l'une des revendications précédentes, **caractérisé par** un deuxième bras de détection XY (26) avec au moins un détecteur (24) qui est conçu pour déterminer l'emplacement du rayonnement qui le frappe et pour en déterminer le déplacement par rapport à un point zéro le long d'un premier et/ou d'un deuxième axe, et un dispositif de commande (25') est conçu pour déplacer la source de rayonnement d'un deuxième système optique en fonction du signal déterminé du au moins un détecteur (24) du deuxième bras de détection XY (26) le long d'un premier et/ou d'un deuxième axe en direction d'un point zéro.

13. Système optique selon l'une des revendications précédentes, **caractérisé en ce que** les détecteurs sont disposés avec leurs surfaces de détection à une distance de la lentille tubulaire exactement unique qui est égale à la largeur d'image de la lentille tubulaire, de sorte que les surfaces de détection du système optique sont disposées dans le plan image de la lentille tubulaire exactement unique.

14. Système optique selon l'une des revendications précédentes, **caractérisé en ce que** la zone de mesure est irradiée en étant simultanément irradiée de manière structurée sur toute sa surface, le système optique présentant dans son trajet du faisceau d'excitation un élément optique disposé dans le plan image de la lentille tubulaire exactement unique, lequel élément optique est agencé pour générer une irradiation structurée.
